# EUROPÄISCHE PATENTSCHRIFT

(11) **EP 3 669 160 B1**
(45) Veröffentlichungstag und Bekanntmachung des Hinweises auf die Patenterteilung: **28.04.2021**
(21) Anmeldenummer: 18752121.6
(22) Anmeldetag: 02.08.2018
(51) Int. Cl.: G01N 1/20, A01J 5/007

(54) **PROBENENTNAHMEVORRICHTUNG ZUR ENTNAHME EINER REPRÄSENTATIVEN MILCHPROBE UND VERFAHREN ZUR ENTNAHME VON REPRÄSENTATIVEN MILCHPROBEN**
SAMPLING APPARATUS FOR TAKING A REPRESENTATIVE MILK SAMPLE AND METHOD FOR TAKING REPRESENTATIVE MILK SAMPLES
DISPOSITIF DE PRÉLÈVEMENT D'ÉCHANTILLON POUR LE PRÉLÈVEMENT D'UN ÉCHANTILLON REPRÉSENTATIF DE LAIT ET PROCÉDÉ POUR LE PRÉLÈVEMENT D'ÉCHANTILLONS REPRÉSENTATIFS DE LAIT

(30) Priorität: 17.08.2017 DE 102017214337
(43) Veröffentlichungstag der Anmeldung: 24.06.2020
(73) Patentinhaber: Lactocorder AG, 9052 Niederteufen (CH)
(72) Erfinder: HOEFELMAYR, Tilman, 9052 Niederteufen (CH)
(74) Vertreter: Grünecker Patent- und Rechtsanwälte PartG mbB
(86) Internationale Anmeldenummer: PCT/EP2018/071007
(87) Internationale Veröffentlichungsnummer: WO 2019/034443

(56) Entgegenhaltungen:
- EP-A1- 0 533 020
- WO-A1-93/12413
- WO-A1-95/23959
- DE-A1- 3 502 858
- DE-A1- 3 528 827
- US-A- 5 245 946

## Beschreibung

### Gebiet der Erfindung

Die vorliegende Erfindung betrifft eine Probenentnahmevorrichtung zur Entnahme einer repräsentativen Milchprobe in einem vorgegebenen Mengenbereich aus einer Förderleitung, in der Milch gefördert wird, beispielsweise in Förderintervallen mit unbekannter Länge, und ein Verfahren zur Entnahme von repräsentativen Milchproben.

### Hintergrund

Zwar wird in der Nahrungsmittelproduktion unter dem Begriff "Milch" hauptsächlich Kuhmilch verstanden, jedoch wird neben der Milch von Kühen auch die Milch, die von anderen domestizierten und landwirtschaftlich genutzten Tieren, zu denen neben Kühen auch Schafe und Ziegen gehören, produziert wird, vom Menschen als Nahrungsmittel verwendet.

Milch ist ein Naturprodukt und enthält naturgemäß in ihrer rohen und insbesondere unbehandelten Form als sogenannte Rohmilch Keime. Daher stellt die Keimbelastung neben der Bestimmung des Fettgehalts der Rohmilch ein Charakteristikum zur Bestimmung der Qualität einer Milch dar. Zum Beispiel erfolgt in Deutschland die Einteilung der Milch in Handelsklassen durch die Milch-Güteverordnung, die Kriterien für die Einteilung definiert, wie etwa die Gesamtkeimzahl, der Eiweiß- und Fettgehalt, der Gefrierpunkt und die Feststellung möglicher Hemmstoffe, wie z.B. Antibiotika, welche die Weiterverarbeitung der Milch zu Joghurt oder Käse behindern. Zum Beispiel stellt die Gesamtkeimzahl einen Indikator für Betriebshygiene und Tiergesundheit dar. Weiterhin kann anhand von Abweichungen im Gefrierpunkt der Milch eine Streckung mit Wasser erkannt werden.

Im Interesse der Tiergesundheit ist beispielsweise eine Überwachung der Rohmilch auf Bakterien hin, die eine Entzündung von Milchdrüsen bei domestizierten Haustieren verursachen können, speziell für die Eutergesundheit von Milchkühen (und anderen domestizierten Haustieren) wichtig, um mögliche Risiken in der Milchproduktion, wie z.B. den krankheitsbedingten Verlust eines Tieres, und eine mögliche Gefahr für die menschliche Gesundheit auszuschließen.

Außerdem ist die Entnahme von Milchproben im Rahmen eines sogenannten "Trächtigkeitstest" wichtig, um den Trächtigkeitsstatus von Milch gebenden Tieren in der Milchproduktion zu überwachen.

Obgleich eine Milchprobenentnahme unter verschiedenen Gesichtspunkten wichtig ist (z.B. Bestimmung der Milchqualität und/oder Überwachung der Eutergesundheit und/oder Überwachung des Trächtigkeitsstatus eines Tieres), ist in jedem Fall eine Gewinnung repräsentativer Proben unter kontrollierten Bedingungen für aussagekräftige Untersuchungsergebnisse wichtig und auch im Interesse des Milchproduzenten. Beispielsweise ist eine Kontamination einer Probe in der Regel erst ersichtlich, wenn in einem Labor eine Bakterienkultur angezüchtet wurde, wobei jedoch zu diesem Zeitpunkt schon Untersuchungskosten entstanden sind, obgleich aus einer kontaminierten Probe kein aussagekräftiges Resultat abgeleitet werden kann. Die Bedeutung der kontrollierten Probenentnahme ist auch daran ersichtlich, dass schon kleinste Fehler bei der Probenentnahme zu einer unter Umständen massiven Kontamination von Proben mit Umweltkeimen führen können, da die Probenentnahme am Melkplatz und eben nicht in einer "klinisch sauberen" Umgebung gewonnen wird.

Zum Beispiel ist bei der Bestimmung der Milchqualität, für die abgesehen von einer möglichen Keimbelastung auch der Fettgehalt wichtig ist, bei der Probenentnahme die Repräsentativität einer Milchprobe von Bedeutung, da sich der Fettgehalt eines Gemelks während eines Melkvorgangs ändert. Insbesondere steigt der Fettgehalt von Milch beim Melken typischerweise von weniger als 1% Fett zu Melkbeginn auf 8% bis 10% am Melkende an. Soll während des Melkens eine repräsentative Milchprobe gezogen werden ist es wichtig, bei der Probenentnahme den gesamten Melkvorgang von Anfang bis Ende möglichst gut "aufzulösen" bzw. abzutasten Damit wird erreicht, dass für von jedem einzelnen Melkabschnitt die diesem entsprechenden Anteile an Milchinhaltsstoffe in die Probe gelangt.

In diesem Zusammenhang ist auch der sogenannte "Carry-Over-Effekt" zu berücksichtigen, bei dem Milchanteile eines zuletzt gemolkenen Tieres in die Probe des nachfolgend gemolkenen Tieres gelangen und diese folglich kontaminieren. Angesichts moderner Genuntersuchungen, bei denen kleinste Mengen an Milchinhaltsstoffen erfasst werden können, sind derartig kontaminierte Milchproben nicht mehr für diese Probenuntersuchungen nutzbar.

Weiterhin neigt die ermolkene Milch, insbesondere solange sie sich auf Körpertemperatur des gemolkenen Tieres befindet, dazu, sich innerhalb kurzer Zeit zu entmischen. Dieser Entmischungsprozess ist im Allgemeinen als Aufrahmung bekannt und wird durch Fettkügelchen in der Milch bewirkt, die ein geringeres spezifisches Gewicht haben als die übrigen Milchkomponenten und im Verlauf von wenigen Minuten je nach Größe schneller oder langsamer zur Oberfläche eines Gemelks aufsteigen. Folglich sind die Inhaltsstoffe in der ermolkenen Milch schon aus diesem Grund keineswegs homogen verteilt.

Im klassischen Fall gewinnt man eine repräsentative Milchprobe dadurch, dass das gesamte Gemelk während des Melkens in einem Melkeimer gesammelt und unmittelbar nach Melkende intensiv umgerührt oder mehrmals zwischen zwei Melkeimern umgossen wird. Direkt im Anschluss an diese Mischung wird aus der Mitte des Eimers mittels einer speziellen kleinen Schöpfkelle wenigstens eine Milchprobe entnommen und diese in ein standardisiertes Analysefläschchen eingegeben, wobei eine Kontamination zu vermeiden ist. Die standardisierten Analysefläschchen haben ein Füllvolumen von 40 bis 50 ml und enthalten in der Regel ein Konservierungsmittel, wie z.B. Pronopol, in Tablettenform. Durch die Kennzeichnung des befüllten Analysefläschchens, in der Regel durch Positions-Nummer, RFID-Nummer oder Barcode, ist die Milchprobe einem Tier zuordenbar und wird von einem Labor analysiert.

Die heute am weitesten verbreiteten Methode der Milchprobenahme wird mit Hilfe eines im Melkstand fest eingebauten oder mobilen Milchmengenmessers durchgeführt, Bei diesen Geräten wird über eine kalibrierte Düse ein definierter Anteil, für gewöhnlich ca. 1% bis 2%, aus der durchströmenden Milch kontinuierlich oder in kleinen Portionen abgespalten und in einen abnehmbaren Zwischenspeicherbehälter, der für gewöhnlich ein Volumen von ca. 400 bis 750 ml aufweist, geleitet. Am Ende der Melkung wird der Inhalt dieses Behälters durch mehrmaliges Umgiessen in ein weiteres Bechergefäss sehr intensiv durchmischt und unmittelbar danach daraus die Analysenflasche, die für gewöhnlich ein Volumen von ca.40 bis 50ml aufweist, befüllt. Bei diesem kostenintensiven Probenahmeverfahren ist man also nicht nur auf einen präzisen Abspaltvorgang angewiesen sondern auch auf eine genaue und zuverlässige manuelle Arbeit der Probenahmeperson. Wird diese Tätigkeit, die vor Ort und während der Melkzeit ausgeführt werden muss, nicht mit der gebotenen Sorgfalt ausgeführt, sind die erhaltenen Probeergebnisse unbrauchbar. Besonders schwer wiegt dabei, dass ein solcher Fehler nicht auf den ersten Blick erkennbar ist.

In einem weiteren bekannten Probenentnahmeverfahren wird basierend auf einem elektronischen Milchmengenmesser nach dem sogenannten "Partial Split Verfahren" eine Milchprobe am Melkende automatisch und direkt in eine Analysenflasche abgefüllt. Während eines Melkvorgangs erfolgt dabei ein kontinuierliches Abspalten eines kleinen Prozentsatzes von ermolkener Milch in einen fest eingebauten Probenbehälter. Am Melkende wird der Probenbehälter stoßweise mit atmosphärischer Luft beaufschlagt, um eine für eine repräsentative Probe notwendige Durchmischung der im Probenbehälter aufgefangenen Milch zu bewerkstelligen. Anschließend wird ein Teil der durchmischten Milch direkt in eine Analysenflasche abgegeben, während der Rest in eine Milchleitung abgesaugt und dem weiteren Gemelk zugeführt wird. Die Durchführung dieses bekannten Probenahmeverfahrens erfordert jedoch, dass der Milchmengenmesser am Melkende noch mit Vakuum beaufschlagt ist, um den Durchmischungsvorgang und die Restabsaugung durchführen zu können. Dies stellt somit eine bei der Mehrzahl von Melkinstallationen nicht erfüllbare technische Anforderung an das Melkverfahren dergestalt dar, dass das Vakuum über das Melkende hinaus am Milchmengenmesser aufrecht zu erhalten ist. Weiterhin benötigt dieses Verfahren nach Beendigung des Melkvorgangs eine zusätzliche Zeit von typischerweise 10 bis 30 Sekunden, um eine Probenmenge in ein Analysenfläschchen abzufüllen. Diese zusätzliche Zeit kann insbesondere bei großen Herden und schnellen Tierwechseln, wie z.B. bei Schafen oder Ziegen erforderlich ist, die Gesamtmelkzeit erheblich und für moderne Betriebe in nicht akzeptabler Weise verlängern. Weiterhin ist dieses Schema einer Probenentnahme aufgrund der relativ großen Innenoberfläche des Geräts anfällig für Carry-Over.

Das bei diesem bekannten Probenahmeverfahren verwendete Partial Split Verfahren wird schon seit Jahrzehnten bei mobilen mechanischen Milchmengenmessern eingesetzt. Dabei wird der vom Euter kommende Milch/Luftstrom von unten über ein langes gerades, sich nach oben verjüngendes und genau vertikal gerichtetes Einlaufrohr gegen einen im Kopf des Gerätes horizontalen Prallteller beschleunigt. Durch die kinetische Energie des dynamisch auftreffenden Milchstroms wird ein homogener 360° "Milchschirm" gebildet. Aus dessen Peripherie wird durch eine kalibrierte Düse typischerweise 1% bis 2 % der ermolkenen Milch kontinuierlich abgespaltet und in einen Messzylinder mit einem Volumen von ca. 750 ml geleitet, anhand dessen entsprechend gradierter Skala die ermolkene Milchmenge direkt abgelesen werden kann.

Dieses Messsystem hat jedoch melktechnisch erhebliche Nachteile: Das Gerät weist einen hohen Strömungswiderstand auf, der einen signifikanten milchflussabhängigen Abfall in der Melkvakuumhöhe verursacht. Ausserdem ist das Gerät stark neigungsempfindlich. Da bei diesem Messprinzip die Genauigkeit der Abspaltung unmittelbar von der Gleichmässigkeit und Homogenität des Milchschirms und damit von der Höhe der kinetischen Energie und der präzisen Ausrichtung des auf den Prallteller treffenden Milchstroms abhängt, sind die genannten Nachteile prinzipbedingt und können nicht "wegoptimiert" werden.

In zwei anderen bekannten Schema zur Probenentnahme (LactoCorder und LactoCorder-S; Eigenprodukte) wird eine repräsentative Milchprobe während des Melkvorgangs direkt, also ohne Probenzwischenspeicherung, in ein standardgemäßes Analysenfläschchen (50ml) abgefüllt. Hierbei ergibt sich jedoch ein Problem, indem ein Abspaltverhältnis in der Größenordnung von ca. 1:100 bis 1:1000 (z.B. eine Probenentnahme von ca. 50 ml auf eine insgesamt ermolkene Milchmenge von 20 bis 50 kg) zuverlässig zu verwirklichen ist. Solch weite Abspaltverhältnisse können jedoch nicht mehr durch weitere simple Reduzierung des Querschnitts der Abspaltbohrung (Abspaltdüse) erreicht werden. Aufgrund von vielfältigen pysikalischen Gegebenheiten (Kapilarkräfte, Oberflächenspannung, Abfluss nicht mehr dem Torricelli-Gesetz folgend, Verkäsung, Verkalkung etc.) sind einer Verkleinerung von Bohrungen in einem Milch führenden System sehr schnell Grenzen gesetzt. Um derart weite Abspaltverhältnisse zu verwirklichen, wie sie für eine direkte Abfüllung einer Analysenflasche ohne Zwischenspeicheung während einer Melkung benötigt werden, kann die erforderliche Verkleinerung der abgespaltenen Milchmenge nur noch mit Hilfe einer zeitlich getakteten Abfüllung erreicht werden. Um die geforderte Repräsentativität der Milchprobe erreichen zu können, muss als Basis für eine solche Taktsteuerung der Milchfluss oder eine damit zusammenhängende Messgrösse während des Melkvorgangs möglichst genau und hoch aufgelöst bestimmt werden. Als weitere Steuerungsgrösse werden die angestrebte Probenmenge sowie eine grobe Schätzung der erwarteten Milchmenge (etwa bis +/- 40% Abweichung von der dann tatsächlich ermolkenen Menge) benötigt, um die durch das Analysenfläschchen vorgegebene Menge einer abzuspaltenden Milchprobe möglichst gut einzuhalten und insbesondere nicht zu übertreffen. Bei einer Abspaltung von mehr als dem Volumen eines Analysenfläschchens besteht die Gefahr, dass überlaufende Milch in das System gelangt und aufgrund des im Analysenfläschchen vorhandenen Konservierungsmittels dieses das Gemelk kontaminiert.

Die oben beschriebenen bekannten Probenentnahmesysteme sind empfindlich gegenüber Schwankungen des Vakuums in einer Messkammer, in der die Menge ermolkener Milch gemessen wird. Weiterhin sind diese Probenentnahmesysteme gegen kleinste Undichtigkeiten im Anschluss eines Analysenfläschchens empfindlich, wie z.B. kleine Unrundheiten am Flaschenhals eines Analysenfläschchens.

Weiterhin besteht die Gefahr, dass Anlaufschwierigkeiten der ermolkenen Milch in Probenentnahmesystemen, in denen eine Milchprobe mittels eines Ventils abgespalten wird, nach einer Ventilöffnung des Ventils bei sehr kurzen Ventilöffnungszeiten die Menge der abgespaltenen einzelnen Subsamples verfälschen.

Weiterhin besteht in den oben beschriebenen Probenentnahmesystemen die Gefahr eines Verhockens, Verkäsens, Verklebens des Ventilverschlusskörpers bei unzureichender Reinigung.

Aus der Schrift DE 10 2011 100 924 A1 ist eine von Milch durchströmbare Vorrichtung zum Durchführen mindestens einer Messung und zur Entnahme von Milchproben aus einer Melkmaschine mit einer Messeinrichtung und einer Probenentnahmevorrichtung bekannt, die dafür ausgelegt, Milch einem Probenbehälter zuzuführen. Stromaufwärts der Messeinrichtung ist eine oben offene Rinne angeordnet, die dafür ausgelegt ist, zumindest einen Teil der Milch, die in einer Luftabscheideeinrichtung von der mit ihr vermischten Luft getrennt wurde, aufzunehmen und derart zu leiten, dass sie zumindest teilweise zur Probenentnahmeeinrichtung fließt.

Die Schrift DE 94 22 296 U1 zeigt eine Melkvorrichtung zum automatischen Melken von Milchkühen, in der Zitzenbecher mit einem Sammelglas durch Milchleitungen verbunden sind. Am Boden des Sammelglases ist ein Stutzen angeordnet, an den eine Leitung angeschlossen ist. Die Leitung ist mit einer Flüssigkeitspumpe verbunden. In einem Leitungsabschnitt der Pumpe sind Leitungen angeschlossen, in denen rechnergesteuerte Ventile angeordnet sind, die in Probenflaschen zur Entnahme von Milchproben münden.

WO 95/23959 A1 zeigt eine Vorrichtung zur repräsentativen Milchprobenentnahme.

WO 93/12413 A1 zeigt einen Durchflussmesser für eine Vorrichtung zur repräsentativen Milchprobenentnahme und eine Verwendung von Leitfähigkeitsmessungen zur Luftmengenbestimmung.

US 5 245 946 A zeigt einen Durchflussmesser für eine Vorrichtung zur repräsentativen Milchprobenentnahme.

EP 0 533 020 A1 zeigt eine Reinigung einer Vorrichtung nach einer Milchprobenentnahme.

DE 35 02 858 A1 und DE 35 28 827 A1 zeigen hierbei eine Impulsvorrichtung, die in Intervallen Proben entnimmt.

Angesichts des oben beschriebenen Stands der Technik besteht eine Aufgabe darin, eine Probenentnahmevorrichtung zur Entnahme einer repräsentativen Milchprobe in einem vorgegebenen Mengenbereich aus einer Förderleitung, in der Milch während eines Melkvorgangs, der eine unbekannte Länge aufweist, gefördert wird, und ein Verfahren zur Entnahme von repräsentativen Milchproben bereitzustellen, wobei die oben genannten Probleme vermieden werden.

### Zusammenfassung

In einem ersten Aspekt stellt die Erfindung eine Probenentnahmevorrichtung zur Entnahme einer repräsentativen Milchprobe gemäß Anspruch 1 bereit.

In einem zweiten Aspekt der vorliegenden Erfindung wird ein Verfahren zur Entnahme von repräsentativen Milchproben gemäß Anspruch 9 bereitgestellt.

In einer vorteilhaften Ausgestaltung des zweiten Aspekts kann das Verfahren ferner ein Erfassen eines Ist-Werts, der die Durchflussrate in der Förderleitung bezeichnet, und/oder eines Ist-Werts, der eine Fließgeschwindigkeit der in der Förderleitung geförderten Milch bezeichnet, ein Aktualisieren der Betriebsrate auf Basis des erfassten Ist-Werts und ein Betreiben der Pumpe auf Basis der aktualisierten Betriebsrate in der ersten Förderrichtung umfassen.

Die oben beschriebenen ersten und zweiten Aspekte der Erfindung ermöglichen eine Probenentnahme einer repräsentativen Milchprobe in einem vorgegebenen Mengenbereich während eines Melkvorgangs mit unbekannter Länge. Dabei wird trotz der unbekannten Länge des Melkvorgangs die Repräsentativität der gesammelten Milchprobe nicht beeinträchtigt, da die Probenentnahme mittels einer Probenentnahmevorrichtung mit Pumpe, Pumpensteuerung und Probenbehälteranschlusselement erfolgt, wobei weiterhin eine Probenentnahme an einer wählbaren Stelle in einer Melkvorrichtung zugelassen wird. Es wird insbesondere eine Kontamination durch ein Übersteigen des vorgegebenen Mengenbereichs durch eine im Melkvorgang insgesamt gesammelte repräsentative Milchprobe, z.B. durch ein Überlaufen eines Probenbehälters, vermieden.

Die oben beschriebenen ersten und zweiten Aspekte der vorliegenden Erfindung erlauben weiterhin eine flexible Anpassung der Probenentnahme an eine große Spreizung von Milchdurchflussraten in Förderleitungen über Förderintervalle mit unbekannter Länge hinweg.

Da die Probenentnahmevorrichtung gemäß dem ersten Aspekt unabhängig von einem angelegten dynamischen oder hydrostatischen Druck in der Förderleitung ist, kann die Probenentnahmevorrichtung an einer beliebigen Stelle entlang der Förderleitung angeordnet werden. Während einer Probenentnahme kann jede Probenuntermenge direkt und drucklos in einen Probenbehälter ausgegeben werden. Es kann dadurch eine schonende Probenentnahme erfolgen, so dass beispielsweise die in der abgespaltenen Milch enthaltenen empfindlichen Fettkügelchen nicht beschädigt werden.

In einer ersten Ausgestaltung des ersten Aspekts ist die Steuerung ferner zu einem Steuern des Betriebs der Pumpe auf Basis eines Vergleichs zwischen einer Ist-Menge, die einer geförderten Ist-Anzahl von Probenuntermengen entspricht, und dem vorgegebenen Mengenbereich konfiguriert. Es lässt sich somit ein vorzeitiges Erreichen des vorgegebenen Mengenbereichs im Förderintervall erkennen und ein Überfließen eines Probenbehälters, in den die Probenuntermengen abgespalten werden, vermeiden. Der Betrieb der Pumpe kann auf Basis des erfassten Ist-Werts der Durchflussrate gesteuert sein. Beispielsweise kann der erfasste Ist-Wert mit wenigstens einem vorangegangenen Ist-Wert der Durchflussrate verglichen werden und die Steuerung kann dazu ausgebildet sein, basierend auf dem Vergleich zwischen dem Ist-Wert der Durchflussrate und wenigstens einem vorangegangenen Ist-Wert, den Betrieb der Pumpe zu steuern. Dadurch lässt sich, trotz eines Förderintervalls mit unbekannter Länge, eine Auflösung einer Probenentnahme zu einer beliebigen Zeitspanne im Förderintervall erreichen. Zum Beispiel kann eine Probenentnahme während eines Melkvorgangs mit einer relativ feinen Auflösung gegen das Melkende des Melkvorgangs, insbesondere bei niedrigen Milchflüssen und hohem Fettgehalt, erfolgen, wenn anhand des Vergleichs ein Melkende identifiziert werden kann. Erfahrungsgemäß kann bei Kühen eine Durchflussrate von 200 g/min als eine Grenze zwischen Melken und Blindmelken, d.h. einem Melken, ohne dass substantiell Milch ermolken wird, angesehen werden. Anhand des Vergleichs könnte ein Blindmelken, und damit ein Melkende eines Melkvorgangs, dadurch erkannt werden, dass anhand eines aktuellen Vergleichs und anhand voran gegangener Vergleiche erkannt wird, dass nach einer erkannten tendenziell abnehmenden Durchflussrate keine wesentliche Änderung der Durchflussrate mehr erfolgt, z.B. eine Änderung der Durchflussrate kleiner ist als ein bestimmter Wert, z.B. kleiner als 10% oder kleiner als 5% oder kleiner als 1%. Eine relativ feine Auflösung kann dann durch eine erhöhte Häufigkeit einer Abspaltung einer Probenuntermenge in einem Einheitszeitintervall, z.B. innerhalb von einer Minute, erreicht werden.

Eine Steuerung auf Basis eines Vergleichs zwischen einem Ist-Wert der Durchflussrate und wenigstens einem vorangegangenen Ist-Wert kann z.B. dahingehend erfolgen, dass eine aktuelle Messgrößen, die einen Ist-Wert der Durchflussrate darstellt, zu wenigstens einer vorangegangenen Messgröße, die einen vorangegangenen Ist-Wert der Durchflussrate darstellt, in Bezug gesetzt wird, z.B. ein Quotient und/oder eine Differenz gebildet wird. Auf Basis dieser Beziehung kann, ohne direkt absolute Größen bestimmen zu müssen, ein Vergleich zwischen unterschiedlichen Durchflussraten erfolgen. Beispielsweise kann, ohne großen Aufwand hinsichtlich einer elektronischen Auswertung in der Steuerung, eine Steuerung der Pumpe durch die Steuerung anhand eines Quotienten und/oder einer Differenz von Ist-Werten erfolgen, wobei in der Steuerung eine Speichervorrichtung, z.B. eine DRAM-Vorrichtung oder eine SRAM-Vorrichtung oder eine Flash-Speichervorrichtung, bereitgestellt ist, die den aktuellen Ist-Wert und wenigstens einen vorangegangenen Ist-Wert wenigstens temporär speichert.

In einer zweiten Ausgestaltung des ersten Aspekts ist die Steuerung ferner zu einem Steuern des Betriebs der Pumpe konfiguriert, um den ersten Betriebsmodus zu unterbrechen und eine Teilmenge der Ist-Menge der geförderten Ist-Anzahl von Probenuntermengen in einem Unterbrechungsintervall in einem zweiten Betriebsmodus in einer zweiten Förderrichtung zu fördern, die zu der ersten Förderrichtung entgegengesetzt orientiert ist. Dadurch lässt sich eine Förderung einer Teilmenge von bisher ermolkener Milch entsprechend der Ist-Menge der bislang durch die Pumpe in der ersten Förderrichtung geförderten Milch, die durch eine Ist-Anzahl von Probenuntermengen bezeichnet wird, während eines Betriebs der Pumpe im zweiten Betriebsmodus in einem Unterbrechungsintervall in einer zweiten Förderrichtung erreichen. Dies ist insbesondere vorteilhaft, wenn zu einem Zeitpunkt erkannt oder abgeschätzt wird, dass sich eine bislang geförderte Ist-Menge einem vorgegebenen Mengenbereich nähert, obgleich noch kein Ende des Förderintervalls absehbar bzw. erkennbar ist. Beispielsweise kann die bislang geförderte Ist-Menge um einen vorgegebenen Wert von dem vorgegebenen Mengenbereich abweichen. Beispielsweise kann der vorgegebenen Wert in einem Bereich von etwa 1% bis etwa 25% einer Obergrenze des vorgegebenen Mengebereichs liegen oder sich um eine bestimmte Anzahl von Probenuntermengen, die im derzeitigen Betrieb jeweils in einem Probenpulsintervall gefördert wird, von einer Obergrenze des vorgegebenen Mengebereichs unterscheiden, beispielsweise um eine Probenuntermenge, zwei Probenuntermenge, drei Probenuntermengen um einige nicht beschränkende Beispiele zu nennen. Um nun der Gefahr einer die vorgegebene Menge in einem Probenbehälter übersteigenden Menge an bis dahin entlang der ersten Förderrichtung geförderten Probenuntermengen vorzubeugen, wird eine Teilmenge entlang der zweiten Förderrichtung gefördert und damit der bis dahin angesammelten Menge an Probenuntermengen entnommen. Dies kann automatisch erfolgen, obgleich ein Ende eines Förderintervalls nicht bekannt und demzufolge eine vorab festgelegte Partition einer repräsentativen Probe mit vorgegebener Menge in diskrete Probenuntermengen nicht exakt bestimmbar ist, da die im Förderintervall insgesamt geförderte Menge vor dem Ende des Förderintervalls nicht bekannt ist.

In einer dritten Ausgestaltung des ersten Aspekts ist die Steuerung ferner zu einem Steuern des gepulsten Betriebs der Pumpe konfiguriert, um im ersten Betriebsmodus eine Anzahl von Probenpulsintervallen für die restliche Dauer des Förderintervalls und/oder eine Größe der Probenpulsintervalle nach dem Unterbrechungsintervall basierend auf einer verbleibenden Ist-Menge zu aktualisieren. Dadurch lässt sich nach dem Unterbrechungsintervall eine bessere Abschätzung zum Sammeln von diskreten Probenuntermengen für eine verbleibende Teilmenge der Ist-Menge nach dem Unterbrechungsintervall basierend auf aktuellen Daten erreichen und es bleibt die Repräsentativität der entnommenen Milchprobe erhalten. Beispielsweise kann eine Erhöhung einer Häufigkeit, mit der Probenuntermengen abgespalten werden, was gleichbedeutend mit einer Erhöhung der Anzahl von Probenpulsintervallen für die restliche Dauer des Förderintervalls ist, mit einer entsprechenden Verringerung der Länge von Probenpulsintervallen einhergehen, so dass eine relative Erhöhung einer Auflösung bei der Probenentnahme erreicht wird, ohne die Repräsentativität der Milchprobe zu verschlechtern. Beispielsweise sind für einen Trächtigkeitstest ungefähr die ersten 10% eines Gemelks ausschlaggebend, so dass hier eine hoch aufgelöste und gleichzeitig repräsentative Milchprobe vorteilhaft erreicht werden kann, wenn hier eine Steuerung der Pumpe derart erfolgt, dass anfänglich entnommene Proben eine hohe Auflösung bereitstellen, insbesondere anfänglich eine erhöhte Anzahl von Proben bzw. Proben mit einer erhöhten Häufigkeit abgespalten werden und ab einem bestimmten Zeitpunkt die Auflösung erniedrigt wird. Zusätzlich oder alternativ kann am Ende eines Melkvorgangs entsprechend vorgegangen werden, um eine hoch aufgelöste Abtastung eines Melkendes zu erreichen.

In einer vierten Ausgestaltung des ersten Aspekts ist in der Probenentnahmevorrichtung ferner eine Mischvorrichtung bereitgestellt, die ausgebildet ist, um die in einem Probenbehälter vor dem Unterbrechungsintervall gesammelte Ist-Menge zu durchmischen. Die Steuerung ist dabei ferner konfiguriert, um die Mischvorrichtung im zweiten Betriebsmodus vor einem Betrieb der Pumpe im Unterbrechungsintervall zu aktivieren. Dadurch kann eine Repräsentativität der Ist-Menge entsprechend der geförderten Ist-Anzahl von Probenuntermengen bis zum Unterbrechungsintervall sichergestellt werden.

In einer fünften Ausgestaltung des ersten Aspekts ist die Steuerung nach wenigstens einem Probenpulsintervall zu einer Aktualisierung einer Anzahl von Probenpulsintervallen basierend auf der gemessenen Größe konfiguriert. Dadurch lässt sich auf Basis der gemessenen Größe eine Anpassung des Betriebs der Pumpe erreichen, ohne weitere Daten heranzuziehen, wie zum Beispiel Daten einer Historie zu vergangenen Förderintervallen.

In einer sechsten Ausgestaltung des ersten Aspekts umfasst die Probenentnahmevorrichtung ferner ein Paar von Ringelektroden, das ausgebildet ist, um einen Leitwert der in der Förderleitung geförderten Milch zu erfassen. Dadurch kann die Probenentnahmevorrichtung unabhängig von externen Mengenmessgeräten ein Maß für die Durchflussrate der Milch in der Förderleitung bestimmen und unabhängig von externen Datenbanken betrieben werden. Durch Hinzufügen von einer weiteren Ringelektrode oder eines weiteren Ringelektrodenpaares kann auch die Geschwindigkeit des Durchflusses gemessen werden und damit die Bestimmung der Durchflussrate weiter verbessert werden. Zum Beispiel kann die Probenentnahmevorrichtung ferner ein weiteres Paar von Ringelektroden umfassen, das ausgebildet ist, um einen Leitwert der in der Förderleitung geförderten Milch zu erfassen, wobei die Steuerung konfiguriert ist, einen Betrieb der Pumpe auf Basis der Fließgeschwindigkeit von in der Förderleitung geförderter Milch basierend auf Leitwerten zu steuern, die durch das Paar von Ringelektroden und das weitere Paar von Ringelektroden erfasst werden. Dabei kann anhand eines Vergleichs der Leitwerte, die von den beiden Paaren von Ringelektroden erfasst werden und einer von Zeitwerten, die diesen Leitwerten zugeordnet sind, eine Fließgeschwindigkeit bestimmt werden.

In einer siebten Ausgestaltung des ersten Aspekts kann die Probenentnahmevorrichtung hierin ferner eine Beruhigungskammer und ein Paar von Elektroden umfassen, die in der Beruhigungskammer angeordnet sind, um eine Leitfähigkeit von Milch in der Beruhigungskammer zu Erfassen. Dadurch kann ein Beitrag von Luft zum Leitwert, der durch das Paar von Ringelektroden erfasst wird, heraus gerechnet werden.

In einer achten Ausgestaltung des ersten Aspekts kann die Probenentnahmevorrichtung ferner einen optischen Durchflusssensor mit einer Lichtquelle und einem Lichtdetektor umfassen, der mit der Steuerung verbunden ist, wobei die Steuerung konfiguriert ist, die Pumpe auf Basis von Daten zu steuern, die von dem optischen Durchflusssensor ausgegeben werden. Mittels des optischen Durchflusssensors kann der Durchfluss von Milch auf einfache Weise quantitativ überwacht werden, ohne dass ein mechanischer Kontakt zwischen Milch und Sensor erforderlich ist, wie etwa mit elektrischen Sensorelementen.

In einer ersten Ausgestaltung des zweiten Aspekts wird ein Betrieb der Pumpe im ersten Betriebsmodus unterbrochen, wenn sich eine Ist-Menge einer geförderten Ist-Anzahl von Probenuntermengen dem vorgegebenen Mengenbereich bis auf einen vorgegebenen Abstand nähert und auf der Basis des erfassten Ist-Werts bestimmt wird, dass ein gegenwärtiges Förderintervall noch nicht beendet ist. Dadurch wird vermieden, dass eine bis dahin entlang der ersten Förderrichtung geförderte Menge an Probenuntermengen, die der bis dahin abgespaltenen Milchmenge entspricht, die vorgegebene Menge übersteigt.

In einer zweiten Ausgestaltung des zweiten Aspekts umfasst das Verfahren ferner ein Betreiben der Pumpe im einem zweiten Betriebsmodus während eines Unterbrechungsintervalls in einer zweiten Förderrichtung, die der ersten Förderrichtung entgegengesetzt ist, um eine Teilmenge der Ist-Menge der geförderten Ist-Anzahl von Probenuntermengen in der zweiten Förderrichtung zu fördern. Damit wird die Teilmenge der bis dahin angesammelten Menge an Probenuntermengen entnommen und es kann sichergestellt werden, dass im weiteren Verlauf des Förderintervalls weiterhin Probenuntermengen entlang der ersten Förderrichtung gefördert werden können.

In einer dritten Ausgestaltung des zweiten Aspekts umfasst der zweite Betriebsmodus ferner ein Mischen der in einem Probenbehälter gesammelten Ist-Menge vor dem Betreiben der Pumpe in dem Unterbrechungsintervall. Dadurch wird eine Repräsentativität der angesammelten Probenuntermengen auch nach dem Unterbrechungsintervall sichergestellt.

In einer vierten Ausgestaltung des zweiten Aspekts umfasst das Verfahren ein Aktualisieren der Betriebsrate der Pumpe basierend auf einer verbleibenden Ist-Menge nach dem Unterbrechungsintervall. Dadurch lässt sich eine Anpassung des Betriebs der Pumpe an den bisherigen Verlauf im Förderintervall erreichen. Folglich wird die Repräsentativität der bis zum Ende des Melkvorgangs insgesamt ermolkenen Milch verbessert, da durch die Aktualisierung der Betriebsrate nach dem Unterbrechungsintervall sicherstellt ist, dass eine Restfüllung im laufenden Melkvorgang nach dem Unterbrechungsintervall repräsentativ für die bis zum Ende des Melkvorgangs abzuspaltenden Probenuntermengen ist.

In einer fünften Ausgestaltung des zweiten Aspekts umfasst das Verfahren ein Aktualisieren einer Anzahl von Probenpulsintervallen, basierend auf der gemessenen Größe nach wenigstens einem Probenpulsintervall im ersten Betriebsmodus. Dadurch lässt sich auf Basis der gemessenen Größe eine Anpassung des Betriebs der Pumpe erreichen, ohne weitere Daten heranzuziehen, wie zum Beispiel Daten einer Historie zu vergangenen Förderintervallen.

In einer sechsten Ausgestaltung des zweiten Aspekts gibt die bestimmte Betriebsrate im ersten Betriebsmodus ein dreimaliges Fördern einer vorbestimmten Probenuntermenge pro Minute vor. Dadurch wird die Probenentnahme mit einer einheitlichen, tendenzmäßig hoch angesetzten Abspaltrate für Probenuntermengen begonnen, wobei eine vorteilhafte Auflösung der Probe zu Beginn des Förderintervalls bereitgestellt wird.

In einer siebten Ausgestaltung des zweiten Aspekts umfasst das Verfahren ferner eine Betreiben der Pumpe in einem dritten Betriebsmodus, nachdem der erste Betriebsmodus abgeschlossen wurde, wobei die Pumpe im dritten Betriebsmodus in einem Spülintervall zur Förderung entlang der zweiten Förderrichtung betrieben wird. Dadurch kann nach Beendigung des ersten Betriebsmodus ein Entfernen von eventuell verbliebenen Milchresten nach Entfernung des Probenbehälters erreicht werden, was das Carry-Over Problem löst.

In wenigstens einigen der oben beschriebenen Ausgestaltungen der ersten und zweiten Aspekte der Erfindung werden die folgenden Vorteile der Erfindung erreicht:
i) Da zur Entnahme einer Probe eine aktiv fördernde Pumpe bereitgestellt wird, ist diese Art der Probenentnahme weder auf einen externen dynamischen Staudruck, noch auf einen externen hydrostatischen Druck angewiesen, der die Abspaltung antreibt. Daher kann eine Entnahme von Proben strömungsmässig auch vor einer Mengenmesskammer angeordnet werden, insbesondere dort, wo immer und ausschliesslich eine Versorgung von aktuell ermolkener Milch erfolgt. Dadurch wird die Gefahr des Carry-Over markant gesenkt.
ii) In einigen Ausgestaltungen kann das Carry-Over Problem weitestgehend ausgeschaltet werden, wenn eine Anordnung der Pumpe vor einer Mengenmesskammer erfolgt und die Pumpe zu Beginn eines Melkvorgangs kurz (z.B. 5 sec.) auf Rückwärtslauf geschaltet wird: Beim neuen Melkbeginn fliessen eventuelle Milchreste des letzten Tieres, die sich noch im langen Milchschlauch befunden haben können, zwar in das Gerät ein, jedoch wird deren Zulaufseite wirksam freigespült (leergeblasen), wenn die Pumpe rückwärts läuft, so dass dann in der anschliessenden Vorwärts-Drehrichtung nur mehr frische Milch vom neuen Tier angesaugt wird. Folglich gelangen keine Milchanteile des letzten Tieres in die Probe, die beim Melken eines nachfolgenden Tieres entnommen wird.
iii) Weiterhin ergibt sich eine wesentlich größere Unabhängigkeit von Druckverhältnissen zwischen einem Probenbehälter, z.B. einem Analysenfläschchen, und einer Mengenmesskammer, insbesondere auch eine Unabhängigkeit von den beim Melken üblichen Vakuumschwankungen in der Förderleitung. Bei Bedarf wäre selbst eine Ausschleusung der Milchprobe aus dem unter Melkvakuum stehenden Gerät in eine Probeflasche, die nicht unter Vakuum stehen muss, technisch möglich. Somit ergeben sich keine Abdichtungsprobleme der Flasche mehr und es ist keine Abziehkraft nötig. Folglich wird eine Verschüttungsgefahr bei der Probenentnahme vermieden.
iv) Zur Minimierung des Stromverbrauches und für eine optimale Schonung der abgespalteten Milch (Fettkügelchen) ist eine quasi drucklose Förderung zu bevorzugen, also praktisch nur noch "aktives Vorwärtsschaufeln" von Probenuntermengen ohne Druckspitzen. Beispielsweise kann dies mit Hilfe einer langsam drehenden Verdrängerpumpe (z.B. Zahnradpumpe) umgesetzt werden.
v) Es ergeben sich keine Anlaufschwierigkeiten und markant verringerte Verstopfungs-, Verklebungs- und Verhockungsgefahr durch kraftvolle Zwangsförderung (siehe Charakteristik eines Gleichstrommotors in abgebremstem Zustand).
vi) Die Probenuntermengen sind von variabler Größe, die eine Einschaltdauer und/oder eine Pumpengeschwindigkeit (z.B. 3 Gänge mithilfe Spannungsregelung über Pulsweitenregelung) einstellbar ist.

### Kurze Beschreibung der Figuren

Weitere vorteilhafte Effekte und Ausführungsformen der Erfindung ergeben sich aus der nachfolgenden detaillierten Beschreibung hinsichtlich der beiliegenden Figuren, in denen:
- Fig. 1: schematisch eine Probenentnahmevorrichtung gemäß einiger anschaulicher Ausführungsformen der Erfindung darstellt;
- Fig. 2: schematisch eine Melkvorrichtung mit wenigstens einer Probenentnahmevorrichtung gemäß einigen anschaulichen Ausführungsformen der Erfindung darstellt;
- Fig. 3a und 3b: schematisch einen Durchflussratensensor gemäß einigen Ausführungsformen der Erfindung darstellt;
- Fig. 3c: schematische einen Durchflussratensensor gemäß einiger alternativer Ausführungsformen der Erfindung darstellt; und
- Fig. 4: schematisch eine Probenentnahmevorrichtung gemäß einiger anschaulicher Ausführungsformen der Erfindung darstellt.

### Detaillierte Beschreibung

In dieser Beschreibung wird verschiedentlich auf ein Intervall Bezug genommen. Im allgemeinen soll unter einem Intervall ein Zeitraum mit einem Anfang und einem Ende oder Anfang/Ende mit einer (endlichen) Länge (entspricht dem Betrag einer Differenz zwischen Anfang und Ende) oder einem Punkt im Intervall, einem sogenannten Stützpunkt, und zugehörigen Abständen von diesem Punkt im Intervall jeweils zu Anfang und Ende des Intervalls verstanden werden. Insbesondere sollen für zwei Zeitpunkte aus einem Intervall auch alle dazwischen liegenden Zeitpunkte zu dem Intervall gehören.

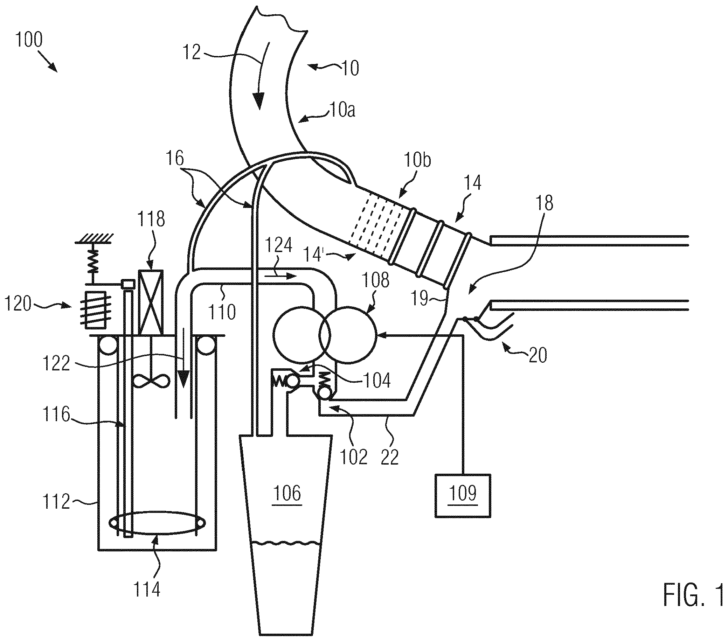

Mit Bezug auf Fig. 1 werden einige anschauliche Ausführungsformen der Erfindung mit Bezug auf eine Melkvorrichtung in größerem Detail beschrieben.

Fig. 1 zeigt schematisch eine Probenentnahmevorrichtung 100 gemäß einiger anschaulicher Ausführungsformen der vorliegenden Erfindung. Dabei ist die Probenentnahmevorrichtung 100 mit einem Milchschlauch 10 verbunden. Der Milchschlauch 10 kann z.B. einen kurzen Milchschlauch, der zwischen einem Melkbecher (nicht dargestellt) und einem Sammelstück (nicht dargestellt) angeordnet ist, oder einen langen Milchschlauch darstellen, der zwischen einem Sammelstück (nicht dargestellt) und einem Sammelbehälter (nicht dargestellt) angeordnet ist. Der Milchschlauch 10 wird entlang einer Richtung 12 von der ermolkenen Milch durchströmt.

Gemäß einigen anschaulichen Ausführungsformen kann der in Fig. 1 dargestellte Abschnitt des Milchschlauchs 10 optional ein eng gebogenes Einlaufrohr 10a, beispielsweise mit einem Biegeradius, der kleiner ist als ein Dreifaches eines Rohrinnendurchmessers des Einlaufrohres 10a, aufweisen, das mit einer stromabwärts angeordneten Messstrecke 10b verbunden ist. Das Einlaufrohr 10a kann z.B. übergangslos in die Messstrecke 10b übergehen, insbesondere kann ein Durchmesser der Messstrecke 10b gleich einem Durchmesser des Einlaufrohrs 10a sein.

Gemäß einigen anschaulichen Ausführungsformen kann die Messstrecke 10b zwei Ringelektroden 14 aufweisen, die gegeneinander elektrisch isoliert sind und von Milch, die im Milchschlauch 10 geführt ist, durchströmt werden. In einem anschaulichen Beispiel sind die Ringelektroden 14 um einen definierten Abstand entlang der Richtung 12 voneinander beabstandet, beispielsweise mit einem Abstand zwischen 5 mm und 7 cm, vorzugsweise in einem Bereich zwischen 5 mm und 35 mm, weiter bevorzugt in einem Bereich zwischen 10 mm und 25 mm, etwa bei 20 mm. Dadurch kann ein Durchflussratensensor bereitgestellt werden, der folgendermaßen funktioniert: eine im Milchschlauch 10 fließende Milch füllt den Querschnitt der Messstrecke 10b abhängig von einer Durchflussrate der Milch im Milchschlauch 10 verschieden stark, insbesondere wird die Messstrecke 10b durch die im Milchschlauch 10 fließende Milch abhängig von der Durchflussrate der Milch in der Messstrecke 10b unterschiedlich stark ausgefüllt. Somit ändert sich abhängig von der Durchflussrate eine Kontaktfläche zwischen der im Milchschlauch 10 fließenden Milch und den Ringelektroden 14 und es ergeben sich Messwerte für eine Leitfähigkeit der im Milchschlauch 10 fließenden Milch, die durch die Ringelektroden 14 erfasst werden. Unter Berücksichtigung der geometrischen Verhältnisse in der Messstrecke 10b kann zwischen der durch die Ringelektroden 14 gemessenen Leitfähigkeit und der Durchflussrate der Milch im Milchschlauch 10 an der Messstrecke 10b ein quantitativer Zusammenhang erstellt werden, beispielsweise unter Durchführung einer Kalibrierungsmessung, wobei dieser Zusammenhang zusammen mit einem durch die Ringelektroden 14 gemessenen Messwert einen entsprechenden Wert für die Durchflussrate der Milch im Milchschlauch 10 ergeben kann. Beispielsweise kann ein entsprechender Zusammenhang durch eine Lookup-Tabelle oder LUT bereitgestellt sein, die in einer Speichervorrichtung (nicht dargestellt) hinterlegt sein kann. Durch Hinzufügen eines weiteren ebenfalls beabstandeten optionalen Ringelektrodenpaares 14' (in Fig. 1 gestrichelt dargestellt) in der Messstrecke kann auch die Geschwindigkeit der die Förderleitung 10 an der Messstrecke 10b durchfliessenden Milch bestimmt werden, indem das Zeitintervall zwischen einem Kontakt der Milch mit dem Paar von Ringelektroden 14' und mit de Paar von Ringelektroden 14 misst. Da der Fluss in einem Melksystem in der Regel nicht völlig gleichmäßig erfolgt, sondern in Form an- und abschwellenden Pfropfen, können diese als Triggerpunkte für eine Geschwindigkeitsmessung durch die Ringelektrodenpaare 14, 14' verwendet werden. Die in Fig. 1 dargestellte Reihenfolge der Paare von beabstandeten Ringelektroden 14 und 14' ist lediglich beispielhaft und stellt keine Beschränkung der Erfindung dar. Alternativ kann eine Reihenfolge der Paare von Ringelektroden 14 und 14' vertauscht sein.

In einer alternativen Ausführungsform kann die Messstrecke 10b drei beabstandete Ringelektroden aufweisen, um die Leitfähigkeit, sowie die Fließgeschwindigkeit bestimmen zu können, wobei eine Ringelektrode des in Fig. 1 dargestellten Paares von Ringelektroden 14 oder eine Ringelektrode des in Fig. 1 dargestellten Paares von Ringelektroden 14' nicht vorgesehen ist. , In einem speziellen anschaulichen Beispiel hierin kann zusätzlich zu dem Paar von Ringelektroden 14 eine weitere beabstandete Ringelektrode (z.B. eine des Paares von Ringelektroden 14') vorgesehen sein, wobei die mittlere Ringelektrode dieser drei beabstandeten Ringelektroden als eine gemeinsame Elektrode für die Leitfähigkeitsmessung und für die Fließgeschwindigkeitsmessung verwendet werden kann.

In Ausführungsformen, in denen das Einlaufrohr 10a vorgesehen ist, kann eine im Milchschlauch 10 transportierte Luft, die zusammen mit der im Milchschlauch fließenden ermolkenen Milch durch den Milchschlauch 10 transportiert wird und demzufolge ein Milch/Luft-Gemisch im Milchschlauch 10 bildet, vor dem Eintritt in die Messstrecke 10b getrennt werden, so dass eine Durchflussrate der im Milchschlauch 10 fließenden Milch genauer bestimmt werden kann, sofern eine genauere Bestimmung der Durchflussrate der Milch erwünscht ist.

Gemäß einigen anschaulichen Ausführungsformen ist stromabwärts der Messstrecke 10b eine Beruhigungskammer 18 angeordnet, in der in einer an einem Boden der Beruhigungskammer 18 angeordneten becherartigen Vertiefung 19 optional Punktelektroden 20 für eine Leitwertmessung der sich in der becherartigen Vertiefung 19 befindlichen beruhigten reinen Milch befinden können. Aufgrund der Messwerte der Ringelektroden 14, die in der Messstrecke 10b einen Leitwert von Milch in einem Luft/Milch-Gemisch bestimmt, kann auf Basis von Messwerten, die durch die Punktelektroden 20 in der becherartigen Vertiefung 19 der Beruhigungskammer 18 erfasst werden, ein Vergleichswert bestimmt werden, so dass der Anteil der Luft im Milch/Luft-Gemisch, der in der Messstrecke 10b miterfasst wird, zusätzlich heraus gerechnet werden kann.

Gemäß einigen anschaulichen Ausführungsformen ist an der becherartigen Vertiefung 19, beispielsweise am Boden der becherartigen Vertiefung 19, eine Verbindungsleitung 22 weggeführt. Die Verbindungsleitung 22 ist mit einer Pumpe 108 der Probenentnahmevorrichtung 100 verbunden und zur Entnahme von Milchproben aus dem Milchschlauch 10 ausgebildet, wie nachfolgend ausführlicher erklärt wird. Dies stellt keine Beschränkung der vorliegenden Erfindung dar und die Verbindungsleitung kann an einer anderen Stelle vom Milchschlauch 10 abgezweigt sein.

In beispielhaften Ausführungsformen umfasst die Probenentnahmevorrichtung 100 weiterhin eine Steuerung 109, die zur Steuerung eines Betriebs der Pumpe 108 ausgebildet ist. Die Steuerung 109 kann mit den Ringelektroden 14 und/oder den Punktelektroden 20 verbunden sein, um Messwerte der verbundenen Elektroden 14 und/oder 20 zu empfangen.

Gemäß einiger anschaulicher Ausführungsformen kann die Steuerung 109 dazu ausgebildet sein, auf Basis der erhaltenen Messwerte eine Durchflussrate der im Milchschlauch 10 durch die Messstrecke 10b fließenden Milch zu bestimmen und/oder den Anteil von Luft und/oder die Fließgeschwindigkeit entsprechend der obigen Erläuterungen zu berücksichtigen. Alternativ kann die Steuerung 109 mit einer elektronischen Auswerteeinheit (nicht dargestellt) verbunden sein, die auf Basis von Messwerten der Ringelektroden 14 eine Durchflussrate bestimmt und diese an die Steuerung 109 übermittelt. Optional kann die von der elektronischen Auswerteeinheit (nicht dargestellt) bestimmte Durchflussrate vor oder nach ihrer Übermittelung an die Steuerung 109 mit Messwerten der Punktelektroden 20 verrechnet werden, um eine bezüglich Luft und der Fließgeschwindigkeit bereinigte Durchflussrate zu erhalten.

Gemäß einigen hierzu alternativen Ausführungsformen kann die Steuerung 109 dazu ausgebildet sein, die von den Ringelektroden 14 erfassten Messwerte zu empfangen. Hierbei kann die Steuerung 109 dazu ausgebildet sein, jeweils einen aktuellen Messwert in einer internen oder externen Speichervorrichtung (nicht dargestellt) als einen Ist-Wert abzulegen und mit wenigstens einem vorherigen Ist-Wert zu vergleichen. Beispielsweise kann ein Vergleich zwischen einem Ist-Wert und wenigstens einem vorangegangenen Ist-Wert dahingehend erfolgen, dass der aktuelle Ist-Wert wenigstens zu einem vorangegangenen Ist-Wert in Bezug gesetzt ist, z.B. durch Bildung eines Quotienten und/oder einer Differenz. Auf Basis dieser Beziehung kann, ohne direkt absolute Werte für Durchflussraten zu bestimmen, ein Vergleich zwischen unterschiedlichen Durchflussraten erfolgen. Beispielsweise kann, ohne großen Aufwand hinsichtlich einer elektronischen Auswertung in der Steuerung 109, eine Steuerung der Pumpe 108 durch die Steuerung 109 anhand eines Quotienten und/oder einer Differenz von Ist-Werten erfolgen, wobei in der Steuerung 109 eine Speichervorrichtung (nicht dargestellt), z.B. eine DRAM-Vorrichtung oder eine SRAM-Vorrichtung oder eine Flash-Speichervorrichtung, bereitgestellt ist, die den aktuellen Ist-Wert und wenigstens einen vorangegangenen Ist-Wert wenigstens temporär speichert.

Da durch die Ringelektroden 14 erfasste Messwerte ein Maß für eine Durchflussrate darstellen, wie gemäß der obigen Beschreibung anhand eines vorab bestimmten Zusammenhangs etabliert sein kann, wird im Folgenden nicht explizit zwischen dem Messwert und der Durchflussrate unterschieden. Weitere Details der Steuerung 109 werden weiter unten ausführlich beschrieben.

In einigen anschaulichen Ausführungsformen kann zwischen der Pumpe 108 und dem Milchschlauch 10 ein Rückschlagventil 102 angeordnet sein, das einen Fluss von Milch, der von der Pumpe 108 zum Milchschlauch 10 gerichtet ist, blockiert und für einen Fluss von Milch, der vom Milchschlauch 10 zu der Pumpe 108 gerichtet ist, offen ist. Zwischen dem Rückschlagventil 102 und der Pumpe 108 ist eine Abzweigung in der Verbindungsleitung 22 gebildet, die mit einem Abfallbehälter 106 in Fluidverbindung steht. Zwischen der Pumpe 108 und dem Abfallbehälter 106 ist ein weiteres Rückschlagventil 104 angeordnet, das für einen von der Pumpe 108 zum Abfallbehälter 106 gerichteten Fluss von Milch offen ist, so dass in dieser Richtung Milch zum Abfallbehälter 106 fließen kann, jedoch ein Fluss von Milch in Gegenrichtung, insbesondere vom Abfallbehälter zum Rückschlagventil 102 gesperrt wird. Dies stellt keine Beschränkung der Erfindung dar und alternativ kann zwischen dem Rückschlagventil 104 und der Pumpe 108 eine Abzweigung in der Verbindungsleitung 22 gebildet sein, die über das Rückschlagventil 102 mit dem Milchschlauch 10 in Fluidverbindung steht.

Gemäß einer beispielhaften Ausführungsform kann die Probenentnahmevorrichtung 100 ferner eine Probenbehälteraufnahme 112 aufweisen, die zur Aufnahme eines Probenbehälters (nicht dargestellt), beispielsweise eines Analysenfläschchens, ausgebildet ist. Die Probenbehälteraufnahme 112 kann mit der Pumpe über eine Verbindungsleitung 110 verbunden sein, wobei sich die Verbindungsleitung 110 von der Pumpe 108 zu einem Probenbehälter (nicht dargestellt) erstreckt, der in der Probenbehälteraufnahme 112 während eines Betriebs der Probenentnahmevorrichtung 100 angeordnet wird. Im Allgemeinen kann die Verbindungsleitung 110 alleine oder zusammen mit der Probenbehälteraufnahme 112 ein Probenbehälteranschlusselement darstellen.

Gemäß einem speziellen anschaulichen Beispiel kann die Probenbehälteraufnahme 112 einen Zentrierring 114 für einen Probenbehälter aufweisen, so dass ein Probenbehälter (nicht dargestellt) in einer genau definierten Weise in die Probenbehälteraufnahme 112 aufgenommen werden kann. Dadurch wird eine zuverlässige Verbindung zwischen der Probenbehälteraufnahme 112 und einem Probenbehälter (nicht dargestellt) ermöglicht, wobei Undichtigkeiten und ein unerwünschter Austritt von Probenflüssigkeit während einer Probenentnahme vermieden werden.

Gemäß einigen anschaulichen Ausführungsformen kann an der Behälteraufnahme 112 ein Lufteinlass 116 oder alternativ/zusätzlich ein Rührer 118 als eine Mischvorrichtung bzw. ein Mischer angeordnet sein, um während eines Betriebs der Probenentnahmevorrichtung 100 in einen Probenbehälter (nicht dargestellt) gefüllte Probenflüssigkeit unter Verwendung des Lufteinlasses 116 und/oder des Rührers 118 zu durchmischen. Beispielsweise kann der Lufteinlass 116 über ein Magnetventil 120 mit einem Luftreservoir (nicht dargestellt) in Verbindung gebracht werden, um Luft über den Lufteinlass 116 zum Mischen in einen Probenbehälter (nicht dargestellt) kontrolliert einzubringen.

Weiterhin können in einigen anschaulichen Ausführungsformen ferner Belüftungsschläuche 16 mit dem Probenbehälter 112 und/oder dem Abfallbehälter 106 verbunden sein, um einen unerwünschten Druckanstieg im Abfallbehälter 106 und/oder einem Probenbehälter (nicht dargestellt) zu vermeiden.

Nachfolgend wird ein Betrieb der Pumpe 108 ausführlicher beschrieben.

Gemäß einigen anschaulichen Ausführungsformen kann die Pumpe 108 derart betrieben werden, dass sie eine in der Verbindungsleitung 22 vorhandene Flüssigkeit entlang zweier zueinander entgegengesetzter Förderrichtungen 122 und 124 fördern kann. Beispielsweise kann in einem Betriebsmodus der Pumpe 108 über die Verbindungsleitung 22 Milch aus dem Milchschlauch 10 durch die Pumpe 108 entlang der Förderrichtung 122 durch das Rückschlagventil 102 in die Probenbehälteraufnahme 112 und insbesondere einen in der Probenbehälteraufnahme 112 angeordneten Probenbehälter (nicht dargestellt) transportiert werden.

In einem weiteren Betriebsmodus der Pumpe 108 kann eine sich in einem Probenbehälter (nicht dargestellt) innerhalb der Probenbehälteraufnahme 112 befindende angesammelte Milch durch die Pumpe 108 entlang der Förderrichtung 124 über das Rückschlagventil 104 in den Abfallbehälter 106 transportiert werden.

In beispielhaften Ausführungsformen wird die Probenentnahmevorrichtung 100 zur Entnahme einer repräsentativen Milchprobe in einem vorgegebenen Mengenbereich, insbesondere ein Volumen eines Probenbehälters (nicht dargestellt), beispielsweise eines Analysenfläschchens mit einem Volumen von 40 bis 50 ml, aus einem Milchschlauch 10 in einem Melkvorgang mit unbekannter Länge gefördert, insbesondere ist die Melkzeit zu Beginn eines Melkvorgangs nicht bekannt.

Gemäß anschaulichen Beispielen ist die Pumpe 108 eine Verdrängerpumpe, beispielsweise eine Zahnradpumpe, eine Kreiskolbenpumpe, eine Flügelzellenpumpe, eine Impellerpumpe, eine Schlauchpumpe, eine Kolbenpumpe oder eine Membranpumpe. Gemäß bevorzugten Beispielen ist die Pumpe eine Zahnradpumpe, beispielsweise eine sehr langsam drehende Zahnradpumpe mit vergleichsweise großen Zähnen, damit empfindliche Fettkügelchen in den geförderten repräsentativen Milchproben nicht beschädigt werden, oder eine Schlauchpumpe.

In einem nicht beschränkenden Beispiel kann eine gemäß einigen anschaulichen Ausführungsformen eingesetzte Zahnradpumpe eine Zahnzahl aus einem Bereich von 10 bis 15, z.B. 12, mit einem Modul zwischen 0,5 und 1, z.B. 0,7, aufweisen. In anschaulichen Beispielen hierin kann eine Zahnbreite z.B. in einem Bereich von 2 mm bis 7 mm liegen, z.B. bei 5 mm. In weiteren anschaulichen Beispielen hierin kann ein Teilkreisdurchmesser in einem Bereich von 5 bis 10 mm liegen, z.B. bei 8,4 mm. In weiteren anschaulichen Beispielen hierin kann eine Flussrate in einem Bereich von in einem Bereich von 20 bis 100 ml/min liegen. In weiteren anschaulichen Beispielen hierin kann eine Drehzahl in einem in einem Bereich von 1,5 bis 8 Umdrehungen pro Sekunde liegen.

In anschaulichen Beispielen kann die Steuerung 109 einen Mikroprozessor (nicht dargestellt) umfassen oder damit in Verbindung stehen, der zum Empfang von Daten von einem Durchflussratensensor konfiguriert ist. In anschaulichen Beispielen kann die Steuerung 109 einen Mikroprozessor umfassen oder damit in Verbindung stehen, der konfiguriert ist, um Daten von den Ringelektroden 14 an der Messstrecke 10b und/oder den Punktelektroden 20 in der Beruhigungskammer 18 zu empfangen. Gemäß einem nicht beschränkenden anschaulichen Beispiel kann die Steuerung 109, wie oben beschrieben ist, dazu konfiguriert sein, aus empfangenen Messwerten des Durchflussratensensors 14 und/oder der Punktelektroden 20 einen Ist-Wert der Durchflussrate im Milchschlauch 10 zu bestimmen oder einen von einer bezüglich der Steuerung 109 externen Auswertevorrichtung bestimmten Ist-Wert der Durchflussrate zu empfangen. Unter einem aktuellen Ist-Wert soll ein jeweils aktuell gemessener Wert und/oder eine aus dem aktuell gemessenen Wert abgeleitete Größe, z.B. eine Durchflussrate, Leitfähigkeit, Menge und dergleichen, verstanden werden. Beispielsweise werden Messdaten mit einem Zeitindikator versehen, so dass Messdaten auch Zeiten zugeordnet werden können, die einen Zeitpunkt bezeichnen, an dem Messdaten erfasst wurden. Zusätzlich oder alternativ kann der aktuelle Ist-Wert einen bereinigten aktuellen Ist-Wert darstellen, in dem der Luftanteil in einem Milch/Luft-Gemisch innerhalb des Milchschlauchs 10 und/oder die Fließgeschwindigkeit heraus gerechnet ist, wie oben beschrieben ist. Weiterhin soll unter einem vorangegangenen Ist-Wert ein in einer Speichervorrichtung (nicht dargestellt) wenigstens temporär gespeicherter Ist-Wert verstanden werden, der aus einer bezüglich einem aktuellen Ist-Wert vorrangegangenen Messung resultiert und in der Speichervorrichtung (nicht dargestellt) gespeichert wurde. Beispielsweise kann einem gespeicherten Wert bei seiner Speicherung ein Zeitwert zugewiesen werden, der beispielsweise für einen Zeitpunkt der Speicherung oder einen Zeitindikator der Messung bezeichnend sein kann. Auf Basis des aktuellen Ist-Werts kann die Steuerung 109 dann, wie oben beschrieben ist, einen Betrieb der Pumpe 108 steuern, indem beispielsweise Probenpulsintervalle, in denen eine diskrete Probenuntermenge entlang der Förderrichtung 122 zu der Probenbehälteraufnahme 112 gefördert werden, bezüglich ihrer Länge und ihrer Häufigkeit in einem Betrieb der Pumpe 108 bestimmt werden.

Gemäß anschaulichen Ausführungsformen kann eine Häufigkeit von Probenpulsintervallen durch eine entsprechende Verteilung der Stützpunkte von Intervallen über ein Einheitszeitintervall hinweg, beispielsweise eine Minute, festgelegt werden. Beispielsweise wird eine dreimalige Entnahme von Probenuntermengen in einem Einheitsintervall von einer Minute durch ein Anordnen von Stützpunkten im Abstand von 20 Sekunden eingestellt. Hierbei ist natürlich die Intervalllänge zu berücksichtigen, insbesondere gilt, dass die Häufigkeit nur dann wohldefiniert ist, solange ein Abstand zwischen jeweils zwei sukzessiven Stützpunkten je Einheitsintervall größer ist als die kleinste Intervalllänge aus den Intervalllängen, die diesen zwei Stützpunkten zugeordnet ist.

In anschaulichen Ausführungsformen entspricht der Betrieb der Pumpe 108 einem gepulsten Betrieb, in dem die Pumpe 108 während einzelner Probenpulsintervalle jeweils eine diskrete Probenuntermenge fördert. Eine Gesamtzahl von diskreten Probenuntermengen, die in einem Melkvorgang über die gesamte Melkzeit durch die Pumpe 108 gefördert werden, entspricht dann einem Gesamtvolumen einer repräsentativen Milchprobe, die in dem Melkvorgang entnommen wird. Um einen Überlauf eines Probenbehälters (nicht dargestellt) in der Probenbehälteraufnahme 112 während einer Probenentnahme in einem Melkvorgang zu verhindern, gilt für das Gesamtvolumen einer im Melkvorgang insgesamt in der Förderrichtung 122 zu fördernden repräsentativen Milchprobe, dass dieses kleiner oder gleich dem vorgegebenen Mengenbereich einer repräsentativen Milchprobe, insbesondere einem vorgegebenen Volumen eines Probenbehälters, ist. Gemäß anschaulichen Beispielen kann ein vorgegebener Mengenbereich in einem Bereich bis zu 40 ml oder bis zu 50 ml liegen.

Anhand einer Einstellung der Fördergeschwindigkeit der Pumpe 108 entlang der Förderrichtung 122 kann ein Volumen einer diskreten Probenuntermenge bestimmt werden. Beispielsweise kann für die Pumpe 108 in den Probenpulsintervallen (ohne Berücksichtigung des Ein- und Ausschaltens der Pumpe) eine feste Fördergeschwindigkeit vorgegeben sein. Alternativ kann eine Fördergeschwindigkeit der Pumpe 108 von einem Ist-Wert der Durchflussrate der Milch im Milchschlauch 100 abhängen und/oder einer aktuellen insgesamt abgespalteten Menge an Probenuntermengen abhängen. In einem anschaulichen, jedoch nicht beschränkenden Beispiel kann z.B. eine Geschwindigkeit der Pumpe 108 von einem Zeitpunkt innerhalb eines Melkvorgangs abhängen, beispielsweise kann eine Fördergeschwindigkeit der Pumpe entsprechend einer abnehmenden Durchflussrate der im Milchschlauch 10 geförderten Milch verringert werden. Zum Beispiel kann die Pumpe 108 wenigstens zwei unterschiedliche Fördergeschwindigkeiten aufweisen, wobei eine der wenigstens zwei unterschiedlichen Fördergeschwindigkeiten abhängig von einem Ist-Wert der Durchflussrate ausgewählt sein kann.

Zusätzlich oder alternativ kann eine Häufigkeit der Probenpulsintervalle abhängig von der Durchflussrate der im Milchschlauch 10 geförderten Milch eingestellt werden, beispielsweise kann die Häufigkeit entsprechend einer zunehmenden Durchflussrate zunehmen und entsprechend einer abnehmenden Durchflussrate abnehmen. Gemäß anschaulichen Beispielen kann z.B. eine Häufigkeit der Probenpulsintervalle (abhängig von einer Länge der Probenpulsintervalle) auf mindestens drei Probenpulsintervalle pro Minute eingestellt sein. Hierbei kann gegebenenfalls eine entsprechende Anpassung der Geschwindigkeit der Pumpe 108 erfolgen, um eine gewünschte Häufigkeit von Probenpulsintervallen je Minute dadurch einzustellen, dass eine Länge der Probenpulsintervalle bei gleichzeitiger Erhöhung der Fördergeschwindigkeit verringert wird, z.B. unter Beibehaltung der in einem Probenpulsintervall geförderten Probenuntermenge.

Gemäß anschaulichen Ausführungsformen kann in der Steuerung 109 ein fester Ausgangswert für die Geschwindigkeit der Pumpe 108 und/oder ein anfängliches Probenpulsintervall hinterlegt sein. Nach einer Durchführung von wenigstens einem anfänglichen Probenpulsintervall kann durch die Steuerung 109 auf Basis eines Ist-Wertes der Durchflussrate der im Milchschlauch 10 geförderten Milch eine Korrektur des Betriebs der Pumpe 108 dahingehend erfolgen, dass ein aktualisiertes Probenplusintervall festgelegt wird, das dem weiteren Betrieb der Pumpe 108 zugrunde gelegt wird. Dabei kann auch eine ursprünglich festgelegte anfängliche Häufigkeit von Probenpulsintervallen je Minute aktualisiert werden. Damit kann eine Probenentnahme anhand eines Ist-Wert des aktuellen Milchflusses im Milchschlauch 10 auf den aktuellen Milchfluss und damit auf einen ungefähren Zeitpunkt in einem Melkvorgang abgestimmt werden.

In anschaulichen Beispielen kann eine Häufigkeit der Probenpulsintervalle je Minute mit abnehmenden Milchfluss im Milchschlauch 10 (kann ein Ende eines Melkvorgangs anzeigen), erhöht werden, so dass eine Anzahl diskreter Probenuntermengen gegen Ende eines Melkvorgangs, an dem ein niedriger Milchfluss mit sehr hohem Fettgehalt besteht, erhöht werden kann. Demzufolge können unerwünschte größere Streuungen bei der Bestimmung des Fettgehalts eines Gesamtgemelks durch diese Art der Probenentnahme vermieden werden.

Weiterhin ist es durch eine Anpassung der Fördergeschwindigkeit der Pumpe 108 zur Einstellung eines Volumens einer diskreten Probenuntermenge in den Probenpulsintervallen nicht erforderlich die Probenpulsintervalle gleichmäßig über die (anfänglich unbekannte) Melkzeit verteilen zu müssen. Beispielsweise kann anfänglich von einer niedrigen oder minimalen Anzahl von Probenplusintervallen pro Minute ausgegangen werden und, diese bedingt durch die Messung der Durchflussrate der im Milchschlauch 10 geförderten Milch abhängig von einem Ist-Wert der Durchflussrate der im Milchschlauch 10 geförderten Milch erhöht werden. Beispielsweise kann zusätzlich oder alternativ eine Fördergeschwindigkeit der Pumpe 108 von einer anfänglich niedrigen oder minimalen Fördergeschwindigkeit 108 abhängig von einem Ist-Wert der Durchflussrate der im Milchschlauch 10 geförderten Milch gesteigert werden.

Gemäß einer Ausführungsform der Erfindung wird eine feinere Auflösung am Melkende eines Melkvorgangs bei niedrigen Milchflüssen und hohem Fettgehalt dadurch erreicht, dass eine Fördergeschwindigkeit der Pumpe 108 zum Ende hin verringert und eine Häufigkeit von Probenpulsintervallen erhöht wird. Alternativ kann eine Länge von Probenpulsintervallen gegen Melkende bei gleichbleibender oder größer werdender Fördergeschwindigkeit der Pumpe 108 verringert werden.

In einigen anschaulichen Ausführungsformen kann die Pumpe 108 innerhalb eines Probenpulsintervalls kontinuierlich bei einer niedrigen Fördergeschwindigkeit entlang der Förderrichtung 122 betrieben werden, um quasi kontinuierlich eine repräsentative Milchprobe über einen Melkvorgang hinweg abzuspalten. Hierbei wird eine sehr große Anzahl diskreter Probenuntermengen über einen Melkvorgang hinweg gewonnen, die für einen kontinuierlichen Betrieb der Pumpe 108 bei niedriger Fördergeschwindigkeit quasi kontinuierlich anzusehen sind.

In einem anderen Betriebsmodus ist die Pumpe 108 zur Förderung von Milch entlang der Förderrichtung 124 über das Rückschlagventil 104 zum Abfallbehälter 106 konfiguriert.

Gemäß anschaulichen Ausführungsformen erkennt die Steuerung 109 einen Füllgrad eines in der Probenbehälteraufnahme 112 angeordneten Probenbehälters (nicht dargestellt). Dies kann, gemäß einiger anschaulicher Beispiele hierin, durch Aufsummieren bzw. Integrieren der bis dahin durch die Pumpe 108 entlang der Förderrichtung 122 geförderten Probenuntermengen bestimmt werden, wobei mittels der Fördergeschwindigkeit der Pumpe 108 eine Menge einer einzelnen diskreten Probenuntermenge bestimmbar ist. Zusätzlich oder alternativ kann an der Probenbehälteraufnahme ein Sensor (nicht dargestellt) vorgesehen sein, um einen Füllgrad eines Probenbehälters in der Probenbehälteraufnahme 112 zu bestimmen bzw. ein Überschreiten eines kritischen Füllgrads in Probenbehälter (nicht dargestellt) zu erkennen. Bei Erfassung eines bestimmten kritischen Werts hinsichtlich eines Füllgrads eines Probenbehälters (nicht dargestellt) und/oder einer bis dahin geförderten kumulativen Probenuntermenge führt die Steuerung 109 eine Überprüfung anhand eines Ist-Werts der Durchflussrate der im Milchschlauch 100 geförderten Milch dahingehend durch, ob ein Melkvorgang zu Ende geht bzw. ein Ende eines aktuellen Melkvorgangs abgeschätzt werden kann (zum Beispiel dadurch, dass der Ist-Wert einen vorab festgelegten Grenzwert unterschreitet, der ein Ende des Melkvorgangs abschätzt - dieser Grenzwert kann vorab in der Steuerung festgelegt oder durch einen Benutzer anhand von Erfahrungswerten eingegebenen werden) und wie viele weitere diskrete Probenuntermengen bis dahin zu fördern sind. Sollte die Abschätzung hiervon ergeben, dass der vorgegebene Mengenbereich der repräsentativen Milchprobe in dieser Abschätzung überschritten wird, beginnt die Pumpe den weiteren Betriebsmodus, der nachfolgend als Unterbrechungsbetriebsmodus bezeichnet wird. Hierbei ist die Steuerung 109 der Pumpe 108 dazu konfiguriert, einen Betrieb der Pumpe 108 im Unterbrechungsbetriebsmodus zu steuern, so dass eine Teilmenge der Ist-Menge der geförderten Ist-Anzahl von Probenuntermengen in einem Unterbrechungsintervall in der Förderrichtung 124 gefördert wird. Dies bedeutet, dass insbesondere die Pumpe 108 im Unterbrechungsintervall derart betrieben wird, dass die Teilmenge insbesondere dem Abfallbehälter 106 zugeführt wird. Hierbei kann ein Volumen der Verbindungsleitung 22 vom Probenbehälter (nicht dargestellt) zum Rückschlagventil 104 berücksichtigt werden, um sicherzustellen, dass eine wohlbestimmte Teilmenge dem Abfallbehälter 106 während des Unterbrechungsintervalls zuverlässig zugeführt wird.

Gemäß einiger anschaulicher Ausführungsformen ist die Steuerung 109 nach einem Ende des Unterbrechungsintervalls dazu konfiguriert, eine Anzahl von Probenpulsintervallen für die restliche Dauer des aktuellen Melkvorgangs und/oder eine Größe der Probenpulsintervalle nach dem Unterbrechungsintervall basierend auf einer verbleibenden Ist-Menge im Probenbehälter zu aktualisieren. Hierbei entspricht eine Ist-Menge im Probenbehälter einer Differenz aus der Ist-Menge der geförderten Ist-Zahl von Probenuntermengen vor Durchführung des Unterbrechungsintervalls minus der entnommenen Teilmenge. Beispielsweise kann eine Entnahme der Teilmenge derart erfolgt, dass etwa die Hälfte der Ist-Menge oder die Hälfte des vorgegebenen Mengenbereichs nach dem Unterbrechungsintervall im Probenbehälter (nicht dargestellt) vorhanden ist. Gemäß speziellen anschaulichen Beispielen kann z. B. eine Ist-Menge von 15 ml bis 35 oder 40 ml, vorzugsweise 15 ml bis 30 ml, weiter bevorzugt 20 ml bis 25 ml, für einen Probenbehälter mit einem vorgegebenen Mengenbereich bis 40 ml oder bis 50 ml verbleiben.

In anschaulichen Ausführungsformen ist die Steuerung dazu konfiguriert, einen Füllgrad im Probenbehälter (nicht dargestellt), sofern dies nicht von einem an der Probenbehälteraufnahme 112 angeordneten Sensor (nicht dargestellt) erkannt wird, zu aktualisieren, indem die in der Förderrichtung 124 im Unterbrechungsintervall geförderte Teilmenge von der aufsummierten Menge an Probenuntermengen abgezogen wird.

Gemäß einiger anschaulichen Ausführungsformen kann die Steuerung 109 ferner dazu ausgebildet sein, eine Mischvorrichtung, insbesondere den Lufteinlass 116 und/oder den Rührer 118 im Unterbrechungsbetriebsmodus vor Durchführung des Unterbrechungsintervalls zu betätigen, um die in einem Probenbehälter (nicht dargestellt) vor dem Unterbrechungsbetriebsmodus gesammelte Ist-Menge zu durchmischen. Dadurch wird sichergestellt, dass die Teilmenge im Unterbrechungsintervall aus einer homogenen Mischung entnommen wird und die verbleibende Ist-Menge dem Unterbrechungsintervall für die bis dahin gesammelte kumulative diskrete Probenuntermenge weiterhin repräsentativ ist.

Gemäß einigen anschaulichen Ausführungsformen kann die Steuerung 109 zur mehrmaligen Wiederholung des oben beschriebenen Unterbrechungsbetriebsmodus ausgebildet sein. Dadurch wird sichergestellt, dass eine repräsentative Milchprobe in einem vorgegebenen Mengenbereich während eines Melkvorgangs mit vorab unbekannter Länge zuverlässig abgespalten wird und kein Überlauf eines Probenbehälters (nicht dargestellt) in der Probenbehälteraufnahme 112 während der Probenentnahme auftritt. Hierbei wird vorzugsweise nach jedem Unterbrechungsbetriebsmodus der Füllgrad aktualisiert oder es wird jede in einem Unterbrechungsintervall entlang der Förderrichtung 124 bei der Bestimmung des Füllgrads durch Integration der bis dahin gesammelten Probenuntermengen mit den als negativ angesetzten geförderten Teilmengen verrechnet.

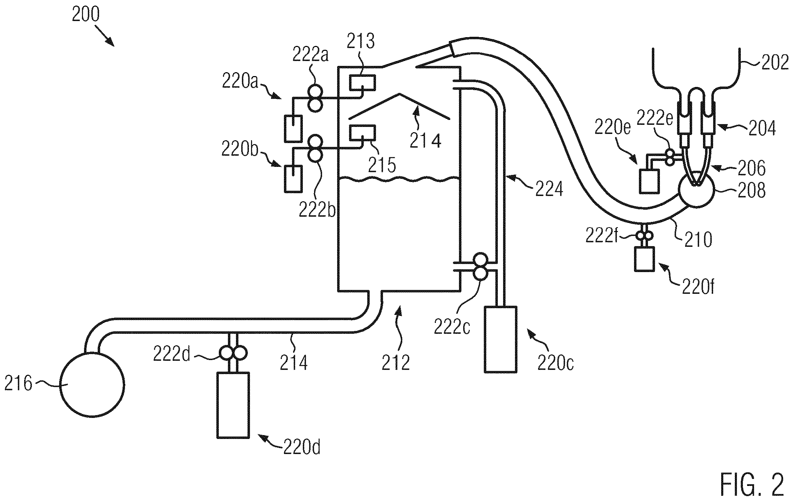

Mit Bezug auf Fig. 2 werden mögliche Positionierungen der oben anhand von Fig. 1 beschriebenen Probenentnahmevorrichtung 100 gemäß verschiedener anschaulicher Ausführungsformen der Erfindung beschrieben.

Fig. 2 zeigt eine Melkvorrichtung 200 mit mehreren Melkbechern 204, die über kurze Milchschläuche 206 mit einem Sammelstück 208 verbunden sind. Das Sammelstück 208 ist über einen langen Milchschlauch 210 mit einem Sammelbehälter 212 verbunden, der über eine Milchleitung 214 mit einer Melkpumpe 216 verbunden ist, die während eines Melkvorgangs ein Melkvakuum an die Melkbecher 204 anlegt. Dadurch wird, während eines Melkvorgangs, ein Euter 202 einer Kuh (nicht dargestellt) gemolken. In der Melkvorrichtung 200 kann wenigstens eine Probenentnahmevorrichtung gemäß der obigen Beschreibung vorgesehen sein. An der Probenentnahmevorrichtung 220a-d kann eine Entlüftung 224 vorgesehen sein, wie schematisch in Fig. 2 dargestellt ist. Die Entlüftung 224 kann bewirken, dass zwischen der Probenentnahmevorrichtung 220a-d und dem Sammelbehälter 212 annähernd Gleichdruck herrscht.

Gemäß einigen anschaulichen Ausführungsformen kann eine Probenentnahmevorrichtung 220a am Sammelbehälter 212 angeordnet sein. Beispielsweise kann die Probenentnahmevorrichtung 220a am Eingang des Sammelbehälters 212 angeordnet sein, wobei ein Überlaufbecken 213 am Eingang des Sammelbehälters 212 angeordnet ist, in das ermolkene Milch aus dem langen Milchschlauch 210 einläuft, das Überlaufbecken 213 überfüllt und sich am Boden des Sammelbehälters 212 ansammelt. Am Boden des Überlaufbeckens 213 kann eine kleine, in den Sammelbehälter 212 mündende Auslaufbohrung angebracht sein, die sicherstellt, dass der Inhalt im Überlaufbecken 213 kontinuierlich ausgetauscht wird und dass das Überlaufbecken am Melkende entleert ist. Am Boden des Überlaufbeckens 213 kann mittels einer Pumpe 222a, die der oben beschriebenen Pumpe 108 entsprechen kann, eine repräsentative Milchprobe gemäß der obigen Beschreibung zur Probenentnahmevorrichtung 100 entnommen werden.

Zusätzlich oder alternativ kann eine Probenentnahmevorrichtung 200b unterhalb einer Spritzwand 214 im Sammelbehälter 212 angeordnet sein, wobei durch den langen Milchschlauch 210 zugeführte Milch an der Spritzwand 214 abprallt, entlang dieser abfließt und sich am Boden des Sammelbehälters 212 ansammelt. Unterhalb der Spritzwand 214 kann ein weiteres Auffangbecken 215 angeordnet sein, das einen Teil der an der Spritzwand 214 abfließenden Milch sammelt. Am Boden dieses weiteren Auffangbeckens 215 kann sich eine Verbindungsleitung zu einer Pumpe 222b befinden, die der oben beschriebenen Pumpe 108 entsprechen kann.

Zusätzlich oder alternativ kann am Boden des Sammelbehälters 212 eine Probenentnahmevorrichtung 220c entsprechend der oben beschriebenen Probenentnahmevorrichtung 100 angeordnet sein, wobei eine vom Sammelbehälter 212 nach außen geführte Verbindungsleitung über eine Pumpe 222c eine repräsentative Milchprobe entnehmen kann, wie oben hinsichtlich Fig. 1 beschrieben ist. Da die Förderleistung der Pumpe 222c nicht vom Druck an deren Einlauf beeinflusst wird, spielt die Stauhöhe der im Sammelbehälter 212 aufgefangenen Milch (hydrostatischer Druck) keine Rolle für die Funktion der Probenentnahmevorrichtung.

Zusätzlich oder alternativ kann in einer Milchleitung nach dem Sammelbehälter 212 eine Probenentnahmevorrichtung 220d angeordnet sein, die über eine Pumpe 222d eine repräsentative Milchprobe entnehmen kann. Die Probenentnahmevorrichtung 222d kann der oben beschriebenen Probenentnahmevorrichtung 100 entsprechen.

Zusätzlich oder alternativ kann an einem kurzen Milchschlauch 206 zwischen einem Melkbecher 204 und dem Sammelstück 208 eine Probenentnahmevorrichtung 220e angeordnet sein, um mittels einer Pumpe 222e eine repräsentative Milchprobe zu entnehmen. Die Probenentnahmevorrichtung 222e kann der oben beschriebenen Probenentnahmevorrichtung 100 entsprechen.

Zusätzlich oder alternativ kann an einem langen Milchschlauch 210 eine Probenentnahmevorrichtung 220f angeordnet sein, die mittels einer Pumpe 222f eine repräsentative Milchprobe zu entnehmen. Die Probenentnahmevorrichtung 222f kann der oben beschriebenen Probenentnahmevorrichtung 100 entsprechen.

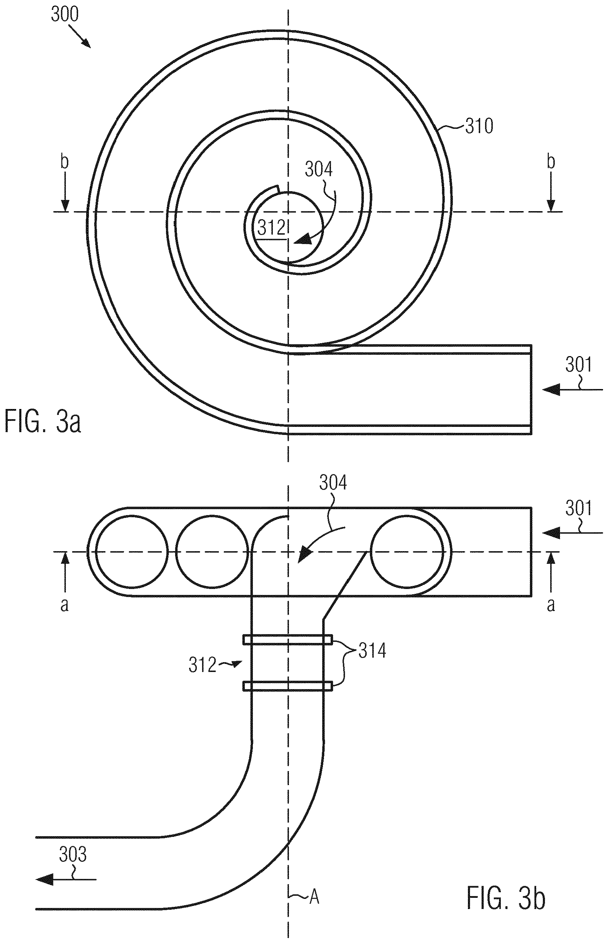

Mit Bezug auf die Fig. 3a und 3b wird ein Durchflussratensensor 300 gemäß einiger anschaulicher Ausführungsformen der vorliegenden Erfindung beschrieben. Hierbei zeigt Fig. 3a eine Aufsicht auf den Durchflussratensensor 300 entlang einer vertikalen Richtung und Fig. 3b zeigt eine horizontale Seitenschnittansicht des Durchflussratensensors 300 entlang der Schnittlinie a-a in Fig. 3a, wobei die Schnittlinie a-a aus Fig. 3a als Orientierungshilfe in Fig. 3b eingezeichnet ist.

Der Durchflussratensensor 300 kann beispielsweise mit einem kurzen Milchschlauch (nicht dargestellt), einem langen Milchschlauch (nicht dargestellt) oder einer Milchleitung (nicht dargestellt) verbunden sein. Beispielsweise kann der Durchflussratensensor 300 derart im kurzen Milchschlauch (nicht dargestellt), im langen Milchschlauch (nicht dargestellt) oder in der Milchleitung (nicht dargestellt) angeordnet sein, dass ein Zulauf in den Durchflussratensensors 300 aus dem kurzen Milchschlauch (nicht dargestellt), dem langen Milchschlauch (nicht dargestellt) oder aus der Milchleitung (nicht dargestellt) entlang eines Pfeils 301 einströmt und den Durchflussratensensor 300 entlang eines Pfeils 303 verlässt, um in den kurzen Milchschlauch (nicht dargestellt), langen Milchschlauch (nicht dargestellt) oder in die Milchleitung (nicht dargestellt) wieder einzutreten. Somit wird der Durchflussratensensor 300 vom Milchfluss während eines Melkvorgangs vollständig durchströmt.

Gemäß einigen anschaulichen Ausführungsformen ist der Durchflussratensensor 300 in Form einer horizontal orientierten Spirale 310, z.B. einer archimedischen Spirale, ausgebildet, so dass ein dem Durchflussratensensor 300 zugeführter Milchfluss die Spirale 310 in einer im Wesentlichen horizontalen Ebene von außen nach innen durchströmt. Dadurch erfolgt eine Beschleunigung der Winkelgeschwindigkeit des Milchflusses entlang der Spirale 310, so dass der Milchstrom in eine sich stromabwärts der Spirale 310 anschließende Messstrecke 312 mit einer azimutalen Beschleunigungskomponente bezüglich einer Achse A der Messstrecke 312 eingebracht wird.

In anschaulichen Ausführungsformen kann die Messstrecke 312 ein Paar von Ringelektroden 314 aufweisen, die ähnlich den bzgl. Fig. 1 oben beschriebenen Ringelektroden 14 ausgebildet sein können. Die Ringelektroden 314 können angeordnet sein, um eine Leitfähigkeit des die Ringelektroden 314 durchströmenden Milchflusses zu messen. Die azimutale Komponente der Beschleunigung am Eingang der Messstrecke 312 führt dazu, dass die Messstrecke 312 azimutal durch einen Milchfilm vollständig bedeckt wird und somit eine stabile und feinfühlige Messung des momentanen elektrischen Widerstands der durchströmten Ringelektroden 314 erfolgen kann.

An der Messstrecke 312 kann eine Verbindungsleitung (nicht dargestellt) vorgesehen sein, die ähnlich der Verbindungsleitung 22 in Fig. 1 oben ausgebildet ist und an die eine Probenentnahmevorrichtung (in den Fig. 3a und 3b nicht dargestellt) angekoppelt ist, ähnlich zu der Probenentnahmevorrichtung 100 in Fig. 1. Dadurch kann gemäß einigen anschaulichen Beispielen auch eine Probenentnahme direkt am Durchflussratensensor 300 erfolgen.

In einigen anschaulichen Ausführungsformen kann wenigstens eine weitere Ringelektrode (nicht dargestellt) vorgesehen sein, um entsprechend der Beschreibung zu Fig. 1 oben einen Geschwindigkeitssensor zu bilden. Hierbei wird auf die entsprechende Beschreibung zu Fig. 1 Bezug genommen.

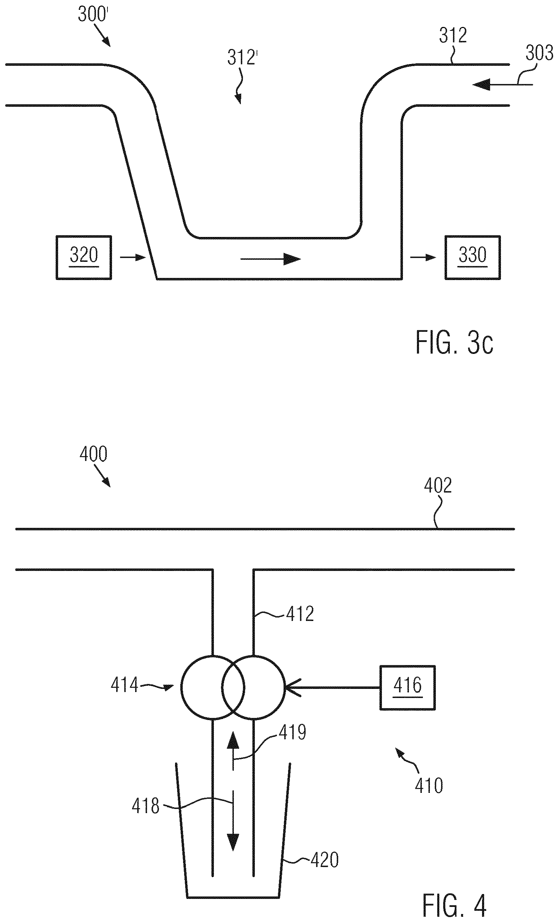

In einigen alternativen Ausführungsformen kann der Durchflussratensensor 300 auch als optischer Sensor ausgebildet sein. Fig. 3c zeigt einen optischen Durchflussratensensor 300', der alternativ zu den Ringelektroden 314 in Fig. 3b vorgesehen sein kann, wobei der optische Durchflussratensensor 300' unterhalb der archimedischen Spirale entsprechend der Pfeile 303 in den Fig. 3b und 3c angeordnet sein kann. Das Leitungsrohr 312 kann eine optische Messstrecke 312' aufweisen, die U-förmig ausgebildet sein kann und wobei an einander gegenüberliegenden Seiten der Messstrecke 312' eine Lichtquelle 320, etwa in Form einer lichtemittierenden Diode oder einer Laserdiode oder dergleichen, und ein Lichtdetektor 330, z.B. eine Photozelle oder ein Photowiderstand oder dergleichen, angebracht sein kann. Die einander zugewandten Enden der Messstrecke 312' an der Seite der Lichtquelle 320 und der Seite des Lichtdetektors 330 können etwa durch Elemente gebildet sein oder Materialabschnitte aufweisen, die wenigstens in einem Abschnitt des durch die Lichtquelle (nicht dargestellt) ausgesendeten Lichts transparent sind. Beispielsweise kann in der Messstrecke 312' an gegenüberliegenden Seiten jeweils ein Fensterabschnitt (nicht dargestellt) gebildet sein.

Während eines Betriebs des Durchflussratensensors 300' wird durch die Lichtquelle 320 kontinuierlich ein Lichtstrahl oder alternativ ein Lichtpuls mit definierter Länge erzeugt, der die Messstrecke 312' durchsetzt, am entgegengesetzten Ende der Messstrecke 312' austritt und auf den Lichtdetektor 330 fällt, wie anhand von Pfeilen in Fig. 3c schematisch angedeutet wird. Dadurch wird im Lichtdetektor 330 eine Messgröße erfasst, wie z.B. ein elektrischer Strom. Fließt nun während einer Messung Milch durch die Messstrecke 312', wird Licht absorbiert, was durch den Lichtdetektor 330 erfasst wird, beispielsweise führt die Absorption von Licht durch Milch dazu, dass ein durch den Lichtdetektor 330 fließender elektrischer Strom verringert wird. Da der Grad an Lichtabsorbtion innerhalb der Messstrecke 312' von einer Schichtdicke der durch das Leitungsrohr 312 fließenden Milch abhängt, kann eine Messung einer Messgröße, die den Grad an Lichtabsorption darstellt, somit ein quantitatives Maß für den Durchfluss von Milch durch das Leitungsrohr 312 darstellen, z.B. eine Menge von das Leitungsrohr 312 innerhalb einer Messzeit durchfließender Milch.

In einer hierzu alternativen Ausführungsform kann ein optischer Durchflussratensensor entsprechend dem optischen Durchflussratensensor 300' in Fig. 3c an der Messstrecke 312 in Fig. 3b zusätzlich oder alternativ zu den Ringelektroden 314 angeordnet sein. Beispielsweise ist eine Lichtquelle (in Fig. 3b nicht dargestellt) entsprechend der Lichtquelle 320 in Fig. 3c an einer Seite des Leitungsrohres an der Messstrecke 312 angeordnet und ein Lichtdetektor (in Fig. 3b nicht dargestellt) entsprechend dem Lichtdetektor 330 in Fig. 3c ist an einer anderen Seite des Leitungsrohres an der Messstrecke 312 angeordnet, so dass die Lichtquelle und der Lichtdetektor einander gegenüberliegen und einander zugerichtet sind. Das Leitungsrohr ist an der Messstrecke 312 wenigstens teilweise für durch den Lichtdetektor erfassbare Strahlung, die von der Lichtquelle ausgesendet wird, optisch transparent. Zum Beispiel sind in der Messstrecke zwei optisch transparente Abschnitte gebildet, die von einer optischen Achse durchsetzt werden, die von der Lichtquelle zum Lichtdetektor gerichtet ist und entlang der der Lichtdetektor eine von der Lichtquelle ausgesendete Strahlung erfassen kann, wobei die optische Achse quer zu einer Achse des Leitungsrohres an der Messstrecke 312 orientiert ist.

Mit Bezug auf Fig. 4 ist schematisch eine Melkvorrichtung 400 mit einer Probenentnahmevorrichtung 410 dargestellt. Die Melkvorrichtung 410 umfasst eine Leitung 402, beispielsweise einen kurzen Milchschlauch, einen langen Milchschlauch eine Milchleitung oder einen Sammelbehälter. An der Leitung 402 ist eine Verbindungsleitung 412 abgezweigt, die die Probenentnahmevorrichtung 410 mit der Leitung 402 verbindet. Das untere Ende der Leitung 413 zwischen der Pumpe 414 und der Probenentnahmevorrichtung 410 kann zumindest teilweise in den Probenbehälter 420 hineinreichen.

In anschaulichen Ausführungsformen umfasst die Probenentnahmevorrichtung 410 eine Pumpe 414, die ausgebildet ist, um eine Probenuntermenge aus der Leitung 402 entlang einer ersten Förderrichtung 418 abzuspalten und eine Menge abgespaltener Milch in einer zweiten Förderrichtung 419 zu fördern. Die Pumpe 414 kann gemäß anschaulicher Ausführungsformen in einem ersten Betriebsmodus betrieben werden, in dem die Pumpe 414 eine repräsentative Milchprobe aus der Leitung 402 abspaltet, in einem zweiten Betriebsmodus entsprechend dem oben beschriebenen Unterbrechungsbetriebsmodus betrieben werden, in dem eine Teilmenge aus einem vor einer Probenentnahme mit der Probenentnahmevorrichtung 410 verbundenen Probenbehälter 420 entlang der zweiten Förderrichtung 419 entnommen wird, und in einem dritten Betriebsmodus betrieben werden, wie nachfolgend genauer beschrieben wird.

In einigen anschaulichen Ausführungsformen kann eine Steuerung 416 bereitgestellt sein, die ein Element der Probenentnahmevorrichtung 410 darstellen kann oder extern zu der Probenentnahmevorrichtung 410 und damit koppelbar ausgebildet ist. Die Steuerung 416 kann ausgebildet sein, um die Pumpe 414 in den verschiedenen Betriebsmodi zu betreiben.

Der erste Betriebsmodus kann gemäß der obigen Beschreibung zu Fig. 1 durchgeführt werden, wobei die Probenuntermengen abgespalten werden.

Der zweite Betriebsmodus kann gemäß dem oben beschriebenen Unterbrechungsbetriebsmodus durchgeführt werden, wie hinsichtlich Fig. 1 oben beschrieben ist, wobei der erste Betriebsmodus unterbrochen und der zweite Betriebsmodus durchgeführt wird. Zum Beispiel kann eine Unterbrechung des ersten Betriebsmodus und ein weiterer Betrieb der Pumpe im zweiten Betriebsmodus während der Unterbrechung des ersten Betriebsmodus dann erfolgen, wenn sich die bislang geförderte Ist-Menge dem vorgegebenen Mengenbereich nähert und insbesondere von diesem maximal um einen vorgegebenen Wert abweicht. Beispielsweise kann der vorgegebenen Wert in einem Bereich von etwa 1% bis etwa 25% einer Obergrenze des vorgegebenen Mengebereichs liegen oder sich um eine bestimmte Anzahl von Probenuntermengen, die im derzeitigen Betrieb jeweils in einem Probenpulsintervall gefördert wird, von einer Obergrenze des vorgegebenen Mengebereichs unterscheiden, beispielsweise um eine Probenuntermenge, zwei Probenuntermengen, drei Probenuntermengen um einige nicht beschränkende Beispiele zu nennen.

Im zweiten Betriebsmodus kann Milch aus dem Probenbehälter 420 in einen Abfallbehälter (nicht dargestellt) entsprechend dem Abfallbehälter 106 in Fig. 1 zurückgepumpt oder in die Leitung 402 zurückgepumpt werden. Der letztere Fall kann dann erfolgen, wenn im Probenbehälter 420 kein Konservierungsmittel vorhanden ist.

Im dritten Betriebsmodus erfolgt eine Spülung der Verbindungsleitung 412, nachdem der erste Betriebsmodus abgeschlossen wurde. Der dritte Betriebsmodus wird durchgeführt, um das sogenannte Carry-Over Problem zu verhindern. Der dritte Betriebsmodus erfolgt am Ende eines Melkvorgangs und insbesondere bei Start eines nachfolgenden Melkvorgangs, wobei die Pumpe 414 zu Beginn des nachfolgenden Melkvorgangs entlang der zweiten Förderrichtung 419 für ein Spülintervall betrieben wird, beispielsweise für eine Zeitdauer von einer Sekunde bis zehn Sekunden, vorzugsweise von einer Sekunde bis sieben Sekunden, weiter bevorzugt bei ungefähr drei Sekunden bis sieben Sekunden, beispielsweise bei etwa fünf Sekunden, so dass garantiert ist, dass eventuell verbliebene Milch der im vorangegangenen Melkvorgang gemolkenen Kuh aus der Verbindungsleitung 412 entfernt wird. Somit werden in der Verbindungsleitung 412 und in der Probenentnahmevorrichtung 410 verbleibende Reste von der im vorangegangenen Melkvorgang ermolkenen Milch aus der Probenentnahmevorrichtung 410 und der Verbindungsleitung 412 entfernt. Durch einen anschließenden Betrieb der Pumpe im ersten Betriebsmodus wird die Verbindungsleitung 412 und die Probenentnahmevorrichtung 410 mit der Milch der im nachfolgenden Melkvorgang gemolkenen Kuh gefüllt und somit das Carry-Over Problem verhindert.

In einigen anschaulichen Ausführungsformen der vorliegenden Erfindung wird eine Probenentnahmevorrichtung bereitgestellt, die unabhängig von einer elektronischen Verbindung zu einem Milchmengenmesser oder zu einem sonstigen Datennetz betrieben werden kann.

Gemäß einiger anschaulicher Ausführungsformen der vorliegenden Erfindung wird eine Probenentnahme während eines Melkvorgangs ermöglicht, bei dem eine für eine Laborauswertung brauchbare Füllung eines Probenbehälters trotz vorab unbekannter Melkzeit in einem Probenbehälter abgespalten werden kann, ohne dass übermäßiger Verlust von ermolkener Milch auftritt.

Nachfolgend wird ein anschauliches, jedoch nicht beschränkendes Beispiel eines erfindungsgemäßen Verfahrens hinsichtlich einer mobilen Probenentnahmevorrichtung explizit beschrieben, die beispielsweise gemäß der Beschreibung der Probenentnahmevorrichtung 100 in Fig. 1 ausgebildet sein und entsprechend einer der Probenentnahmevorrichtungen 220a bis 220f in Fig. 2 in einer Melkvorrichtung angeordnet sein kann. Die nachfolgend beschriebene Probenentnahmevorrichtung kann unabhängig von einem separaten Durchflussratensensor, wie oben hinsichtlich der Figuren 1 bis 3 beschrieben ist, funktionieren und funktioniert insbesondere unabhängig von einer elektronischen Verbindung zu einem Milchmengenmesser (in den Fig. 1 und 2 nicht dargestellt) oder zu einem sonstigen Datennetz (in Fig. 1 und 2 nicht dargestellt). Das bedeutet, dass die nachfolgend beschriebene Probenentnahmevorrichtung nicht unbedingt auf Erfahrungswerte für ein jeweils zu melkenden Tieres zurückgreift, sofern nicht entsprechende Daten von der Probenentnahmevorrichtung in einer Historie zu vergangenen Melkvorgängen angelegt und in einer externen oder internen Speichervorrichtung (in den Fig. 1 und 2 nicht dargestellt) gespeichert wurden, die mit der Probenentnahmevorrichtung in Verbindung steht. Insbesondere kann für die nun beschriebene Probenentnahmevorrichtung, anstatt auf tierindividuelle Erfahrungsdatenmengen zurückzugreifen, lediglich eine allgemeine Schätzung für die bei einer Herde (oder eventuell Fütterungsgruppe) im Mittel zu erwartende Milchmenge zur Verfügung gestellt werden.

Einem insbesondere bei mobilen Vorrichtungen auftretenden Problem von fehlenden tierindividuellen Erwartungsmengen, z.B. bei einer mobilen Probenentnahmevorrichtung ohne Zwischenspeicherung von Milchproben in einem Zwischenspeicher, kann gemäß einigen Ausführungsformen der Erfindung gemäß der folgenden Beschreibung begegnet werden.

In einem ersten Schritt wird eine Probenentnahme initialisiert. Anschließend wird ein Anteil von abzuspaltender Milch an der Gesamtmilch abgeschätzt. Hierbei kann beispielsweise eine Abspaltrate abgeschätzt werden, die durch einen Quotienten aus einer gewünschten Füllung eines Probenbehälters, z.B. 30ml bis 50ml und einem vorbestimmten Erwartungswert berechnet wird. Der vorbestimmte Erwartungswert kann durch einen Bediener z.B. basierend auf seiner Erfahrung mit einer Herde oder einem zu melkenden Tier eingegeben oder in der Probenentnahmevorrichtung als ein Ausgangswert fest vorgegeben sein. In einem Beispiel kann der vorbestimmte Erwartungswert in einem Bereich von 6 kg bis 30 kg liegen. In anschaulichen Beispielen kann sich eine Abspaltrate zwischen 0,1% und ca. 0,9% oder 1000 ppm bis 9000 ppm ergeben.

In einem weiteren Schritt wird anhand einer gewünschten Anzahl von Probenuntermengen, z.B. in einem Bereich von dreißig bis einhundert Probenuntermengen, aus denen sich eine repräsentative Milchproben zusammensetzen soll, eine Teilmenge bestimmt, die angibt, nach jeweils welcher in einer Förderleitung, z.B. die Förderleitung 10 in Fig. 1, einer Melkvorrichtung geförderten Milchmenge eine Abspaltung einer Probenuntermenge durchgeführt werden soll. In einem anschaulichen Beispiel kann die Teilmenge als Quotient aus dem Erwartungswert zu der gewünschten Anzahl von Probenuntermengen bestimmt werden. In einem anschaulichen Beispiel kann sich eine Menge für jede Probenuntermenge von 60 g bis 900 g ergeben.

Es ist von Vorteil, wenn eine Probenentnahme mit einer einheitlichen und tendenziell zu hoch angesetzten Abspaltrate begonnen wird. Dies kann zum Beispiel erreicht werden, indem ein erwartungsgemäß zu niedriger Erwartungswert oder unterschätzter Erwartungswert im ersten Schritt vorgegeben wird. In einigen anschaulichen Beispielen kann eine Schätzung einer mittleren Milchmenge für eine Herde gemacht werden und diese mit einem Wichtungsfaktor aus einem Bereich zwischen 0 und 1, z.B. 0.70, verrechnet werde. In einem anschaulichen Beispiel hierein kann dies mit einem geschätzten Erwartungswert von z.B. 15 kg pro Melkvorgang einen unterschätzten Erwartungswert von 10,5 kg ergeben. Dieser unterschätzte Erwartungswert kann zur Folge haben, dass ein Probenbehälter in der Regel schon vor dem Melkende vollständig gefüllt wird. Falls dieser Fall eintritt, wird ein Betrieb einer Pumpe der Probenentnahmevorrichtung durch eine Steuerung der Pumpe, die die abgefüllte Menge genau kennt, gestoppt und es erfolgt als nächstes ein Betrieb der Pumpe im oben beschriebenen Unterbrechungsbetriebsmodus. Damit wird vermieden, dass mit einem Konservierungsmittel vermischte Milch überläuft und z.B. in eine zu einem Sammeltank führende Milchleitung gelangt.

Falls z.B. eine vorzeitige Füllung eines Probenbehälters erkannt wird, z.B. ein Probenbehälter einen Füllgrad von wenigstens 40 ml, z.B. 48 ml, erreicht oder überschritten hat, wird eine Anzahl von Probenuntermengen, die noch in der Pumpe und in Verbindungsleitungen zum Probenbehälter sind, in den Probenbehälter gepumpt und es wird die Pumpe gestoppt. Anschließend erfolgt, wie oben hinsichtlich des zweiten Betriebsmodus oder Unterbrechungsbetriebsmodus beschrieben ist, ein Mischvorgang, der auf die sich im Probenbehälter befindliche Milch angewendet wird. Beispielsweise kann unterhalb der Milchoberfläche Luft als Luftstoss in den Probenbehälter eingebracht werden oder es kann eine Durchmischung mit einem eingebauten Rührer durchgeführt werden.

Nach einer Durchmischung sind die in der Flasche gesammelten Milchinhaltsstoffe der nunmehr homogenen Milch repräsentativ für die bis zu diesem Zeitpunkt vom Tier abgemolkenen Milch.

Anschließend wird ein Teil, z.B. 10 bis 30 ml, vorzugsweise 20 ml +/- 5 ml, der gemischten Milch durch die in einem Rückwärtsgang geschaltete Pumpe wieder aus dem Probenbehälter abgepumpt und über einen Seitenkanal in einen Abfallbehälter entsorgt. Insbesondere wird die Repräsentativität der in der Flasche verbleibenden homogenen Milch durch das Abpumpen nicht verändert.

Nach diesem Schritt kann die Probenentnahmevorrichtung durch die Steuerung der Pumpe oder eine dazu zusätzliche CPU eine neue Abspaltrate berechnen, die um das Verhältnis aus der verbleibenden Restmenge im Probenbehälter, die z.B. 48 ml minus 20ml beträgt, zu einer vollständigen Füllung oder einem vor der Reduzierung erreichten Füllgrad, z.B. 48 ml, verringert ist. Diese neue Abspaltrate bedeutet folgendes: wäre diese neu errechnete Abspaltrate von Melkbeginn an verwendet worden, wären bis diesem Zeitpunkt genau die nach dem Abpumpen verbliebene Menge an Milch im Probenbehälter gesammelt, beispielsweise wären 28 ml gemäß den expliziten Zahlenwerten in die Flasche abgefüllt worden.

Die Steuerung kann nun als nächstes mit dieser neu errechneten Abspaltrate den Betrieb der Pumpe in dem Betriebsmodus fortsetzten, der durch den Unterbrechungsbetriebsmodus unterbrochen wurde. Der Probenbehälter kann nun bis zum Melkende aus dem restlichen Teil des Gemelks des Tieres befüllt werden.

Obgleich eine Reduzierung der Probenmenge im zweiten Betriebsmodus der Pumpe erfolgte, sind die Milchinhaltsstoffe dieser Restfüllung wiederum repräsentativ für den restlichen Teil des Gemelks des Tieres. Damit ist die Repräsentativität der gesamten Füllung in der Analysenflasche für das gesamte Gemelk des Tieres gegeben.

Falls der Probenbehälter nochmals vor dem Melkende voll wird , kann der zweite Betriebsmodus wiederholt werden. Die sich dabei ergebende nächste neue Abspaltrate wäre dann die aktuelle Abspaltrate multipliziert mit einem oben beschriebenen Verringerungsfaktor, beispielsweise bei einer Verringerung auf 28 ml von einer Ausgangsfüllung von 48 ml ergibt sich als Verringerungsfaktor 28/48.

Es ergibt sich, dass bei dieser Probenentnahmevorrichtung eine Nachjustierung oder Optimierung der Abspaltrate erfolgt.

In einer anschaulichen Ausgestaltung der oben hinsichtlich der Figuren 1 bis 4 beschriebenen Probenentnahmevorrichtung kann die oben bezüglich verschiedener Ausführungsformen beschriebene Pumpe eine Verdrängerpumpe sein. Damit kann eine Pumpe bereitgestellt sein, deren Förderstrom nur schwach von der Förderhöhe der Pumpe abhängt. Weiterhin kann ein Förderstrom dieser Pumpe über Hubhöhe und Hubzahl sehr exakt und reproduzierbar einstellbar sein, was zu einer Förderung von sehr exakt und reproduzierbar eingestellten diskreten Probenuntermengen führt. Insbesondere sind entsprechende Pumpen auch für niedrige Antriebsdrehzahlen geeignet, die beispielsweise in der Förderung von Milchproben vorteilhaft sein können, um die empfindlichen Fettkügelchen in Milchproben möglichst wenig zu beschädigen.

Obgleich die vorliegende Erfindung hinsichtlich spezieller Ausführungsformen mit Bezug auf einen Melkvorgang beschrieben wurde stellt dies keine Beschränkung der Erfindung dar. Die Erfindung ist auf ein beliebiges System anwendbar, in dem ein Lebensmittel in Förderintervallen in einer Förderleitung gefördert wird und repräsentative Proben des in der Förderleitung geförderten Lebensmittels im Förderintervall abzuspalten sind. Die Erfindung stellt dabei eine vorteilhafte Probenentnahmevorrichtung bereit, die dazu in der Lage ist, repräsentative Proben zu entnehmen, selbst wenn das Förderintervall zum Zeitpunkt des Beginns der Probenentnahme nicht vollständig bekannt ist.

## Patentansprüche

1. Probenentnahmevorrichtung (100) zur Entnahme einer repräsentativen Milchprobe in einem vorgegebenen Mengenbereich aus einer Förderleitung (10), in der Milch in Förderintervallen mit unbekannter Länge gefördert wird, umfassend:
eine Pumpe (108),
eine Steuerung (109) der Pumpe (108), und
ein mit der Pumpe (108) in Verbindung stehendes Probenbehälteranschlusselement (112),
wobei die Steuerung (109) konfiguriert ist, basierend auf dem vorgegebenen Mengenbereich und einer gemessenen Größe, die eine Durchflussrate der in der Förderleitung (10) geförderten Milch bezeichnet, und/oder einer gemessenen Größe, die eine Fließgeschwindigkeit der in der Förderleitung (10) geförderten Milch bezeichnet, und/oder einer vorgegebenen Größe, die eine durch die Förderleitung (10) in einem Förderintervall insgesamt zu fördernde Menge an Milch bezeichnet, einen gepulsten Betrieb der Pumpe (108) in einem ersten Betriebsmodus in einem Förderintervall zu steuern,
wobei die Pumpe (108) während des gepulsten Betriebs jeweils in einem Probenpulsintervall eine diskrete Probenuntermenge entlang einer ersten Förderrichtung (122) der Pumpe (108) fördert,
wobei der vorgegebene Mengenbereich größer oder gleich einer Gesamtmenge ist, die einer Gesamtzahl von diskreten Probenuntermengen in dem Förderintervall entspricht,
wobei die Steuerung (109) ferner konfiguriert ist, mit abnehmender Durchflussrate der in der Förderleitung (10) geförderten Milch eine Fördergeschwindigkeit der Pumpe (108) zu verringern und eine Häufigkeit von Probenpulsintervallen zu erhöhen.

2. Probenentnahmevorrichtung (100) nach Anspruch 1, wobei die Steuerung (109) ferner zu einem Steuern des Betriebs der Pumpe (108) auf Basis eines Vergleichs aus einer Ist-Menge, die einer geförderten Ist-Anzahl von Probenuntermengen entspricht, und des vorgegebenen Mengenbereichs konfiguriert ist, und
wobei die Steuerung (109) zu einem Steuern des Betriebs der Pumpe (108) konfiguriert ist, um den ersten Betriebsmodus zu unterbrechen und eine Teilmenge der Ist-Menge der geförderten Ist-Anzahl von Probenuntermengen in einem Unterbrechungsintervall in einem zweiten Betriebsmodus in einer zweiten Förderrichtung (124) zu fördern, die zu der ersten Förderrichtung (122) entgegengesetzt orientiert ist.

3. Probenentnahmevorrichtung (100) nach Anspruch 2, wobei die Steuerung (109) ferner zu einem Steuern des gepulsten Betriebs der Pumpe (108) konfiguriert ist, um im ersten Betriebsmodus eine Anzahl von Probenpulsintervallen für die restliche Dauer des Förderintervalls und/oder eine Größe der Probenpulsintervalle nach dem Unterbrechungsintervall basierend auf einer verbleibenden Ist-Menge zu aktualisieren.

4. Probenentnahmevorrichtung (100) nach Anspruch 2 oder 3, ferner umfassend eine Mischvorrichtung (116, 118), die ausgebildet ist, um die in einem Probenbehälter vor dem Unterbrechungsintervall gesammelte Ist-Menge zu durchmischen, wobei die Steuerung (109) ferner konfiguriert ist, die Mischvorrichtung (116, 118) im zweiten Betriebsmodus vor einem Betrieb der Pumpe (108) im Unterbrechungsintervall zu aktivieren.

5. Probenentnahmevorrichtung (100) nach einem der Ansprüche 1 bis 4, wobei die Steuerung (109) konfiguriert ist, nach wenigstens einem Probenpulsintervall eine Anzahl von Probenpulsintervallen basierend auf der gemessenen Größe zu aktualisieren.

6. Probenentnahmevorrichtung (100) nach einem der Ansprüche 1 bis 5, ferner umfassend ein Paar von Ringelektroden (14), das ausgebildet ist, um einen Leitwert der in der Förderleitung (10) geförderten Milch zu erfassen.

7. Probenentnahmevorrichtung (100) nach Anspruch 6, ferner umfassend eine Beruhigungskammer und ein Paar von Elektroden, die in der Beruhigungskammer angeordnet sind, um eine Leitfähigkeit von Milch in der Beruhigungskammer zu Erfassen.

8. Probenentnahmevorrichtung (100) nach Anspruch 6 oder 7, ferner umfassend ein weiteres Paar von Ringelektroden (14'), das ausgebildet ist, um einen Leitwert von in der Förderleitung (10) geförderter Milch zu erfassen, wobei die Steuerung (109) konfiguriert ist, einen Betrieb der Pumpe (108) auf Basis von der Fließgeschwindigkeit von in der
Förderleitung (10) geförderter Milch basierend auf Leitwerten zu steuern, die durch das Paar von Ringelektroden (14) und das weitere Paar von Ringelektroden (14') erfasst werden.

9. Verfahren zur Entnahme von repräsentativen Milchproben in einem vorgegebenen Mengenbereich aus einer Förderleitung (10), in der Milch in Förderintervallen mit unbekannter Länge gefördert wird, wobei der vorgegebene Mengenbereich größer oder gleich einer Gesamtmenge ist, die einer Gesamtzahl von diskreten Probenuntermengen in dem Förderintervall entspricht,
und wobei das Verfahren in einem ersten Betriebsmodus umfasst:
Bestimmen einer Betriebsrate einer Pumpe (108) basierend auf dem vorgegebenen Mengenbereich und einem vorgegebenen Wert, der eine Länge eines Förderintervalls abschätzt und/oder eine im Förderintervall durch die Förderleitung (10) geförderte Gesamtmenge abschätzt und/oder eine Größe abschätzt, die eine in der Förderleitung (10) im Förderintervall geförderte Durchflussrate oder Änderung davon bezeichnet, wobei die Betriebsrate eine bestimmte Anzahl von Probenpulsintervallen festlegt, wobei die Pumpe (108) in jedem Probenpulsintervall jeweils eine diskrete Probenuntermenge entlang einer ersten Förderrichtung (122) fördert, und
Betreiben der Pumpe (108) auf Basis der bestimmten Betriebsrate in der ersten Förderrichtung (122), wobei mit abnehmender Durchflussrate der in der Förderleitung (10) geförderten Milch eine Fördergeschwindigkeit der Pumpe (108) zu verringert und eine Häufigkeit von Probenpulsintervallen erhöht werden.

10. Verfahren nach Anspruch 9, wobei das Verfahren während des Betriebs der Pumpe (108) umfasst:
Erfassen eines Ist-Werts, der die Durchflussrate in der Förderleitung (10) bezeichnet, und/oder eines Ist-Werts, der eine Fließgeschwindigkeit der in der Förderleitung (10) geförderten Milch bezeichnet,
Aktualisieren der Betriebsrate auf Basis des erfassten Ist-Werts, und
Betreiben der Pumpe (108) auf Basis der aktualisierten Betriebsrate in der ersten Förderrichtung (122).

11. Verfahren nach Anspruch 9 oder 10, wobei ein Betrieb der Pumpe (108) im ersten Betriebsmodus unterbrochen wird, wenn sich eine Ist-Menge einer geförderten Ist-Anzahl von Probenuntermengen dem vorgegebenen Mengenbereich bis auf einen vorgegebenen Abstand nähert und auf Basis des erfassten Ist-Werts bestimmt wird, dass ein gegenwärtiges Förderintervall noch nicht beendet ist.

12. Verfahren nach Anspruch 11, ferner umfassend ein Betreiben der Pumpe (108) in einem zweiten Betriebsmodus während eines Unterbrechungsintervalls in einer zweiten Förderrichtung (124), die der ersten Förderrichtung (122) entgegengesetzt ist, um eine Teilmenge der Ist-Menge der geförderten Ist-Anzahl von Probenuntermengen in der zweiten Förderrichtung (124) zu fördern.

13. Verfahren nach Anspruch 12, wobei der zweite Betriebsmodus ferner ein Mischen der in einem Probenbehälter gesammelten Ist-Menge vor dem Betreiben der Pumpe (108) in dem Unterbrechungsintervall umfasst.

14. Verfahren nach einem der Ansprüche 11 bis 13, ferner umfassend ein Aktualisieren der Betriebsrate der Pumpe (108) basierend auf einer verbleibenden Ist-Menge nach dem Unterbrechungsintervall.

15. Verfahren nach einem der Ansprüche 9 bis 14, ferner umfassend ein Aktualisieren einer Anzahl von Probenpulsintervallen basierend auf der gemessenen Größe nach wenigstens einem Probenpulsintervall im ersten Betriebsmodus.

16. Verfahren nach einem der Ansprüche 9 bis 15, wobei die bestimmte Betriebsrate im ersten Betriebsmodus ein dreimaliges Fördern einer Probenuntermenge pro Minute vorgibt.

## Claims

1. A sampling apparatus (100) for taking a representative milk sample in a predetermined quantity range from a conveying line (10) in which milk is conveyed at conveying intervals of unknown length, comprising:
a pump (108),
a controller (109) of the pump (108), and
a sample container connection element (112) connected to the pump (108),
wherein the controller (109) is configured to control a pulsed operation of the pump (108) in a first mode of operation in a conveying interval based on the predetermined quantity range and a measured quantity indicating a flow rate of the milk conveyed in the conveying line (10) and/or a measured variable indicating a flow rate of the milk conveyed in the conveying line (10) and/or a predetermined variable indicating a total quantity of milk to be conveyed through the conveying line (10) in a conveying interval,
wherein the pump (108) conveys a discrete sample subset along a first conveying direction (122) of the pump (108) during pulsed operation in each sample pulse interval,
wherein the predetermined quantity range is greater than or equal to a total quantity corresponding to a total number of discrete sample subsets in the conveying interval,
wherein the controller (109) is further configured to reduce a delivery velocity of the pump (106) and increase a frequency of sample pulse intervals as the flow rate of the milk conveyed in the conveying line (10) decreases.

2. Sampling apparatus (100) according to claim 1, wherein the controller (109) is further configured to control the operation of the pump (108) based on a comparison of an actual quantity corresponding to an actual number of sample subsets conveyed and the predetermined quantity range, and
wherein the controller (109) is configured to control the operation of the pump (108) to interrupt the first mode of operation and convey a subset of the actual quantity of the actual number of sample subsets conveyed at an interruption interval in a second mode of operation in a second conveying direction (124) oriented opposite the first conveying direction (122).

3. Sampling apparatus (100) according to claim 2, wherein the controller (109) is further configured to control the pulsed operation of the pump (108) to update, in the first mode of operation, a number of sample pulse intervals for the remaining duration of the conveying interval and/or a size of the sample pulse intervals after the interruption interval based on a remaining actual quantity.

4. Sampling apparatus (100) according to claim 2 or 3, further comprising a mixing device (116, 118) adapted to mix the actual quantity collected in a sample container prior to the interruption interval, wherein the controller (109) is further configured to activate the mixing device (116, 118) in the second mode of operation prior to operation of the pump (108) in the interruption interval.

5. Sampling apparatus (100) according to one of claims 1 to 4, wherein the controller (109) is configured to update a number of sample pulse intervals based on the measured size after at least one sample pulse interval.

6. Sampling apparatus (100) according to one of claims 1 to 5, further comprising a pair of ring electrodes (14) adapted to detect a conductance of milk conveyed in the conveying line (10).

7. Sampling apparatus (100) according to claim 6, further comprising a settling chamber and a pair of electrodes disposed in the settling chamber for detecting a conductivity of milk in the settling chamber.

8. Sampling apparatus (100) according to claim 6 or 7, further comprising a further pair of ring electrodes (14') adapted to detect a conductance of milk conveyed in the conveying line (10), wherein the controller (109) is configured to control operation of the pump (108) based on the flow rate of milk conveyed in the conveying line (10) based on conductance values detected by the pair of ring electrodes (14) and the further pair of ring electrodes (14').

9. Method for taking representative milk samples in a predetermined quantity range from a conveying line (10) in which milk is conveyed in conveying intervals of unknown length, wherein the predetermined quantity range is greater than or equal to a total quantity corresponding to a total number of discrete sample subsets in the conveying interval,
and wherein the method comprises in a first mode of operation:
determining an operating rate of a pump (108) based on the predetermined quantity range and a predetermined value that estimates a length of a conveying interval and/or estimates a total quantity conveyed through the conveying line (10) in the conveying interval and/or estimates a quantity that indicates a flow rate or change thereof conveyed in the conveying line (10) in the conveying interval, the operating rate defining a certain number of sample pulse intervals, wherein the pump (108) conveys a discrete sample subset along a first conveying direction (122) in each sample pulse interval, and
operating the pump (108) based on the determined operating rate in the first conveying direction (122), wherein with decreasing flow rate of the milk conveyed in the conveying line (10), a conveying velocity of the pump (108) is reduced and a frequency of sample pulse intervals is increased.

10. Method according to claim 9, the method comprising during operation of the pump (108):
detecting an actual value indicating the flow rate in the conveying line (10) and/or an actual value indicating a flow velocity of the milk conveyed in the conveying line (10),
updating the operating rate based on the detected actual value, and
operating the pump (108) based on the updated operating rate in the first conveying direction (122).

11. Method according to claim 9 or 10, wherein operation of the pump (108) in the first mode of operation is interrupted when an actual quantity of an actual number of sample subsets conveyed approaches the predetermined quantity range up to a predetermined distance and it is determined on the basis of the detected actual value that a current conveying interval has not yet ended.

12. Method according to claim 11, further comprising operating the pump (108) in a second mode of operation during an interruption interval in a second conveying direction (124) opposite the first conveying direction (122) to convey a subset of the actual quantity of the conveyed actual number of sample subsets in the second conveying direction (124).

13. Method according to claim 12, wherein the second mode of operation further comprises mixing the actual quantity collected in a sample container prior to operating the pump (108) in the interruption interval.

14. Method according to one of claims 11 to 13, further comprising updating the operating rate of the pump (108) based on a remaining actual quantity after the interruption interval.

15. Method according to one of claims 9 to 14, further comprising updating a number of sample pulse intervals based on the measured quantity after at least one sample pulse interval in the first mode of operation.

16. Method according to one of claims 9 to 15, where the determined operating rate in the first mode of operation specifies a sample subset to be conveyed three times per minute.

## Revendications

1. Dispositif d'échantillonnage (100) permettant de prélever un échantillon représentatif de lait dans une plage de quantité prédéfinie à partir d'une conduite de transport (10) au sein de laquelle du lait est transporté à des intervalles de transport de longueur inconnue, comprenant :
une pompe (108),
une commande (109) de la pompe (108), et
un élément de raccord de récipient à échantillons (112) relié à la pompe (108),
dans lequel la commande (109) est configurée pour, dans un premier mode de fonctionnement et pendant un intervalle de transport, commander un fonctionnement en mode pulsé de la pompe (108) en se basant sur la plage de quantité prédéfinie et sur une grandeur mesurée indiquant un débit d'écoulement du lait transporté dans la conduite de transport (10) et/ou sur une grandeur mesurée indiquant une vitesse d'écoulement du lait transporté dans la conduite de transport (10) et/ou sur une grandeur prédéfinie indiquant une quantité totale de lait à transporter grâce à la conduite de transport (10) pendant un intervalle de transport,
dans lequel la pompe (108) transporte une sous-quantité discrète d'échantillons le long d'une première direction de transport (122) de la pompe (108) pendant le fonctionnement en mode pulsé et pendant respectivement un intervalle d'impulsion d'échantillon,
dans lequel la plage de quantité prédéfinie est supérieure ou égale à une quantité totale correspondant à un nombre total de sous-quantités discrètes d'échantillons pendant l'intervalle de transport,
dans lequel la commande (109) est en outre configurée pour réduire une vitesse de transport de la pompe (108) et augmenter une fréquence d'intervalles d'impulsion d'échantillon lorsque le débit d'écoulement du lait transporté dans la conduite de transport (10) diminue.

2. Dispositif d'échantillonnage (100) selon la revendication 1, dans lequel la commande (109) est en outre configurée pour commander le fonctionnement de la pompe (108) sur la base d'une comparaison entre une quantité réelle, correspondant à un nombre réel de sous-quantités d'échantillons transportées, et la plage de quantité prédéfinie, et
dans lequel la commande (109) est configurée pour commander le fonctionnement de la pompe (108) afin d'interrompre le premier mode de fonctionnement et de transporter une quantité partielle de la quantité réelle correspondant au nombre réel de sous-quantités d'échantillons transportées pendant un intervalle d'interruption, dans un second mode de fonctionnement et dans une seconde direction de transport (124) orientée à l'opposé de la première direction de transport (122).

3. Dispositif d'échantillonnage (100) selon la revendication 2, dans lequel la commande (109) est en outre configurée pour commander le fonctionnement en mode pulsé de la pompe (108) afin, dans le premier mode de fonctionnement, de mettre à jour un nombre d'intervalles d'impulsion d'échantillon pour la durée résiduelle de l'intervalle de transport et/ou mettre à jour une grandeur des intervalles d'impulsion d'échantillon après l'intervalle d'interruption en se basant sur une quantité réelle restante.

4. Dispositif d'échantillonnage (100) selon la revendication 2 ou 3, comprenant en outre un dispositif de mélange (116, 118) conçu pour mélanger la quantité réelle collectée dans un récipient à échantillons avant l'intervalle d'interruption, dans lequel la commande (109) est en outre configuré pour activer le dispositif de mélange (116, 118) dans le second mode de fonctionnement pendant l'intervalle d'interruption avant un fonctionnement de la pompe (108).

5. Dispositif d'échantillonnage (100) selon l'une quelconque des revendications 1 à 4, dans lequel la commande (109) est configurée pour mettre à jour un nombre d'intervalles d'impulsion d'échantillon après au moins un intervalle d'impulsion d'échantillon en se basant sur la grandeur mesurée.

6. Dispositif d'échantillonnage (100) selon l'une quelconque des revendications 1 à 5, comprenant en outre une paire d'électrodes annulaires (14) conçue pour enregistrer une conductance du lait transporté dans la conduite de transport (10).

7. Dispositif d'échantillonnage (100) selon la revendication 6, comprenant en outre une chambre de stabilisation et une paire d'électrodes agencées dans la chambre de stabilisation afin d'enregistrer la conductivité du lait dans la chambre de stabilisation.

8. Dispositif d'échantillonnage (100) selon la revendication 6 ou 7, comprenant en outre une autre paire d'électrodes annulaires (14') conçue pour enregistrer une conductance du lait transporté dans la conduite de transport (10), dans lequel la commande (109) est configurée pour commander le fonctionnement de la pompe (108) sur la base de la vitesse d'écoulement du lait transporté dans la conduite de transport (10) en se basant sur des valeurs de conductance enregistrées grâce à la paire d'électrodes annulaires (14) et à l'autre paire d'électrodes annulaires (14').

9. Procédé permettant de prélever des échantillons de lait représentatifs dans une plage de quantité prédéfinie à partir d'une conduite de transport (10) au sein de laquelle du lait est transporté à des intervalles de transport de longueur inconnue, dans lequel la plage de quantité prédéfinie est supérieure ou égale à une quantité totale correspondant à un nombre total de sous-quantités discrètes d'échantillons pendant l'intervalle de transport,
et dans lequel le procédé comprend les étapes consistant, dans un premier mode de fonctionnement, à :
définir un débit de fonctionnement d'une pompe (108) en se basant sur la plage de quantité prédéfinie et sur une valeur prédéfinie évaluant une longueur d'un intervalle de transport et/ou évaluant une quantité totale transportée pendant l'intervalle de transport grâce à la conduite de transport (10) et/ou évaluant une grandeur indiquant un débit d'écoulement obtenu dans la conduite de transport (10) pendant l'intervalle de transport ou une modification de ladite grandeur, dans lequel le débit de fonctionnement détermine un nombre défini d'intervalles d'impulsion d'échantillon, dans lequel la pompe (108) transporte respectivement une sous-quantité discrète d'échantillons le long d'une première direction de transport (122) à chaque intervalle d'impulsion d'échantillon, et
faire fonctionner la pompe (108) sur la base du débit de fonctionnement défini dans la première direction de transport (122), dans lequel une vitesse de transport de la pompe (108) est réduite et une fréquence des intervalles d'impulsion d'échantillon est augmentée lorsque le débit d'écoulement du lait transporté dans la conduite de transport (10) diminue.

10. Procédé selon la revendication 9, dans lequel le procédé comprend, pendant le fonctionnement de la pompe (108), les étapes consistant à :
enregistrer une valeur réelle indiquant le débit d'écoulement dans la conduite de transport (10) et/ou une valeur réelle indiquant une vitesse d'écoulement du lait transporté dans la conduite de transport (10),
mettre à jour le débit de fonctionnement sur la base de la valeur réelle enregistrée, et faire fonctionner la pompe (108) dans la première direction de transport (122) sur la base du débit de fonctionnement mis à jour.

11. Procédé selon la revendication 9 ou 10, dans lequel un fonctionnement de la pompe (108) dans le premier mode de fonctionnement est interrompu si une quantité réelle, correspondant à un nombre réel de sous-quantités transportées d'échantillons, se rapproche de la plage de quantité prédéfinie à concurrence d'une distance prédéfinie et s'il est établi, sur la base de la valeur réelle enregistrée, qu'un intervalle de transport en cours n'est pas encore terminé.

12. Procédé selon la revendication 11, comprenant en outre une étape consistant à faire fonctionner la pompe (108) dans un second mode de fonctionnement pendant un intervalle d'interruption et dans une seconde direction de transport (124) opposée à la première direction de transport (122) afin de transporter dans la seconde direction de transport (124) une quantité partielle de la quantité réelle correspondant au nombre réel de sous-quantités transportées d'échantillons.

13. Procédé selon la revendication 12, dans lequel le second mode de fonctionnement comprend en outre une étape consistant à mélanger la quantité réelle collectée dans un récipient à échantillons, pendant l'intervalle d'interruption et avant l'étape consistant à faire fonctionner la pompe (108).

14. Procédé selon l'une quelconque des revendications 11 à 13, comprenant en outre une étape consistant à mettre à jour le débit de fonctionnement de la pompe (108) en se basant sur une quantité réelle restante après l'intervalle d'interruption.

15. Procédé selon l'une quelconque des revendications 9 à 14, comprenant en outre une étape consistant à mettre à jour un nombre d'intervalles d'impulsion d'échantillon en se basant sur la grandeur mesurée après au moins un intervalle d'impulsion d'échantillon dans le premier mode de fonctionnement.

16. Procédé selon l'une quelconque des revendications 9 à 15, dans lequel le débit de fonctionnement défini détermine dans le premier mode de fonctionnement un transport d'une sous-quantité d'échantillons trois fois par minute.
